# EUROPEAN PATENT SPECIFICATION

(11) **EP 4 193 778 B1**
(45) Date of publication and mention of the grant of the patent: **30.09.2026**
(21) Application number: 21749970.6
(22) Date of filing: 14.07.2021
(51) Int. Cl.: H04W 74/0833, H04W 64/00, H04W 74/00

(54) **POSITIONING REFERENCE SIGNAL (PRS) TO RANDOM ACCESS CHANNEL OCCASION (RO) MAPPING**
ZUORDNUNG VON POSITIONIERUNGSREFERENZSIGNALEN (PRS) ZU DIREKTZUGRIFFSKANALGELEGENHEITEN (RO)
MISE EN CORRESPONDANCE DE SIGNAL DE RÉFÉRENCE DE POSITIONNEMENT (PRS) AVEC UNE OCCASION DE CANAL D'ACCÈS ALÉATOIRE (RO)

(30) Priority: 07.08.2020 IN 202011033930
(43) Date of publication of application: 14.06.2023
(60) Divisional application: 23206401.4 / 4 290 971
(73) Proprietor: QUALCOMM INCORPORATED, San Diego, California 92121-1714 (US)
(72) Inventor: MANOLAKOS, Alexandros, San Diego, California 92121-1714 (US); KUMAR, Mukesh, San Diego, California 92121-1714 (US); YERRAMALLI, Srinivas, San Diego, California 92121-1714 (US); DUAN, Weimin, San Diego, California 92121-1714 (US); LY, Hung Dinh, San Diego, California 92121-1714 (US)
(74) Representative: Reddie & Grose LLP
(86) International application number: PCT/US2021/041666
(87) International publication number: WO 2022/031415

(56) References cited:
- US-A1- 2020 245 372

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communication (GSM), etc.

A fifth generation (5G) wireless standard, referred to as New Radio (NR), calls for higher data transfer speeds, greater numbers of connections, and better coverage, among other improvements. The 5G standard, according to the Next Generation Mobile Networks Alliance, is designed to provide data rates of several tens of megabits per second to each of tens of thousands of users, with 1 gigabit per second to tens of workers on an office floor. Several hundreds of thousands of simultaneous connections should be supported in order to support large sensor deployments. Consequently, the spectral efficiency of 5G mobile communications should be significantly enhanced compared to the current 4G standard. Furthermore, signaling efficiencies should be enhanced and latency should be substantially reduced compared to current standards.

In order to help determine the location or position of a user equipment (UE) within a telecommunications network, the UE may perform a measurement of a positioning reference signal (PRS), which is a downlink (DL) signal transmitted by a transmission / reception point (TRP), which may be a base station (BS). The UE can then report the time of arrival (ToA) difference for PRS signals received from multiple distinct TRPs, and a core network node such as a location server (LS) can use the reports to determine the position of the UE. Uplink (UL) positioning is also possible, using sounding reference signals (SRSs) transmitted by UEs. Based on the received SRSs, the base stations can measure and report (to the location server) the arrival time, the received power, and the angle of arrival from which the position of the UE can be estimated. The time difference between DL reception and UL transmission can also be reported and used in round-trip time (RTT) based positioning schemes, where the distance between a base station and a UE can be determined based on the estimated RTT. By combining several such RTT measurements, involving different base stations, the position can be determined.

The conventional method described above has some disadvantages. For example, currently, a UE can only perform a PRS operation if the UE is in the radio resource control (RRC) connected state (RRC_CONNECTED). Thus, the determine its position, a UE currently has to transition from an RRC_IDLE or RRC_INACTIVE state to the RRC_CONNECTED state before the UE can perform a PRS measurement. One reason that the UE must be in the RRC_CONNECTED state is so that the BS, and by extension, the LS, knows how to interpret the PRS measurements provided to it by the UE. In conventional telecommunication networks, even if a UE in the RRC_IDLE or RRC_INACTIVE state were to provide a PRS measurement to the BS, the BS does not know what that PRS measurement represents, e.g., which TRP, layer, PRS resource, etc., is being measured. Another reason that the UE cannot perform a PRS operation in the RRC_IDLE or RRC_INACTIVE states is that currently there is no defined way to do this. US 2020/245372 A1 describes a method that may be performed by a wireless device such as a user equipment (UE) and generally includes: receiving at least one downlink (DL) signal from one or more base stations or transmitting at least one uplink (UL) positioning reference signal (PRS), the received at least one DL signal comprising: at least one DL PRS, at least one synchronization signal block (SSB), at least one system information block (SIB), at least one other reference signal comprising a channel state information reference signal (CSI-RS), or a combination thereof, wherein at least one measurement is performed based, at least in part, on the received at least one DL signal or the transmitted at least one UL PRS; and performing at least one adjustment for random access based, at least in part, on the at least one measurement.

Document US 2020/245372 A1 discloses an example of the prior art.

### SUMMARY

The scope of the present invention is defined by the scope of the appended claims.

### BRIEF DESCRIPTION OF THE DRAWINGS

The accompanying drawings are presented to aid in the description of examples of one or more aspects of the disclosed subject matter and are provided solely for illustration of the examples and not limitation thereof:
FIG. 1 illustrates an exemplary wireless communications system, according to various aspects;
FIGS. 2A and 2B illustrate example wireless network structures, according to various aspects;
FIGS. 3A to 3C are simplified block diagrams of several sample aspects of components that may be employed in wireless communication nodes and configured to support communication according to various aspects;
FIGS. 4A and 4B are diagrams illustrating example frame structures and channels within the frame structures, according to various aspects;
FIGS. 5A and 5B are graphs showing possible locations of ROs in the time and frequency domains according to different RACH configurations;
FIGS. 6A and 6B illustrate portions of an exemplary method of wireless communication according to aspects;
FIGS. 7A and 7B illustrate portions of an exemplary method of wireless communication according to aspects;
FIGS. 8A and 8B illustrate portions of an exemplary method of wireless communication according to aspects;
FIGS. 9A through 9F are graphs showing exemplary PRS to RO mappings according to various aspects; and
FIG. 10 is a signal messaging diagram showing an exemplary method of wireless communication according to aspects.

### DETAILED DESCRIPTION

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage, or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, tracking device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" (UT), a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on IEEE 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals (or simply "reference signals") the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" includes an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

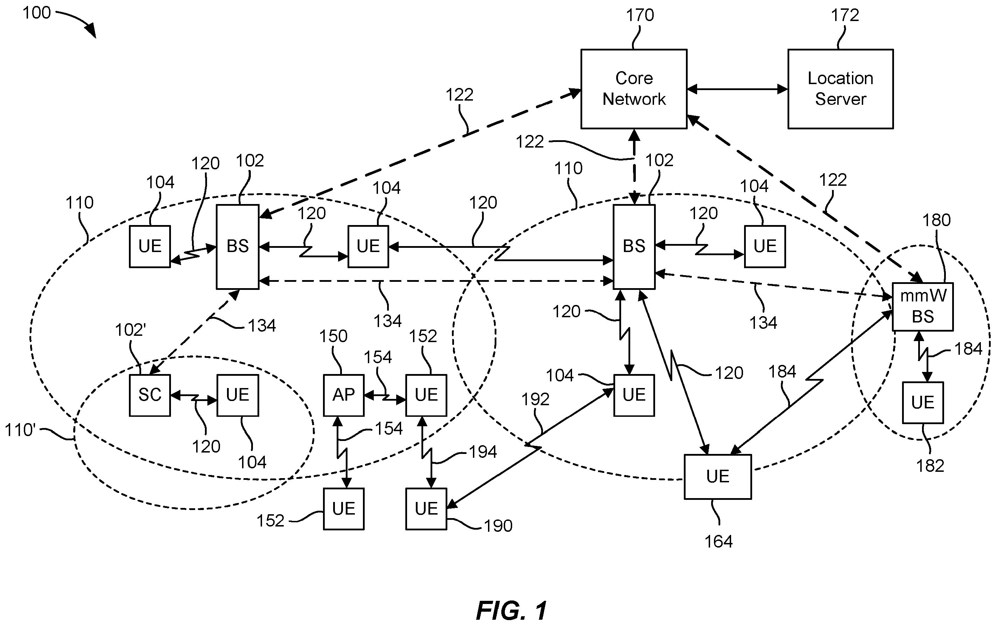

FIG. 1 illustrates an exemplary wireless communications system 100 according to various aspects. The wireless communications system 100 (which may also be referred to as a wireless wide area network (WWAN)) may include various base stations 102 and various UEs 104. The base stations 102 may include macro cell base stations (high power cellular base stations) and/or small cell base stations (low power cellular base stations). In some aspects, the macro cell base station may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (which may be part of core network 170 or may be external to core network 170). In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In some aspects, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), a virtual cell identifier (VCI), a cell global identifier (CGI)) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' may have a coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen-before-talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while canceling to suppress radiation in undesired directions.

Transmit beams may be quasi-collocated, meaning that they appear to the receiver (e.g., a UE) as having the same parameters, regardless of whether or not the transmitting antennas of the network node themselves are physically collocated. In NR, there are four types of quasi-collocation (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Receive beams may be spatially related. A spatial relation means that parameters for a transmit beam for a second reference signal can be derived from information about a receive beam for a first reference signal. For example, a UE may use a particular receive beam to receive one or more reference downlink reference signals (e.g., positioning reference signals (PRS), narrowband reference signals (NRS) tracking reference signals (TRS), phase tracking reference signal (PTRS), cell-specific reference signals (CRS), channel state information reference signals (CSI-RS), primary synchronization signals (PSS), secondary synchronization signals (SSS), synchronization signal blocks (SSBs), etc.) from a base station. The UE can then form a transmit beam for sending one or more uplink reference signals (e.g., uplink positioning reference signals (UL-PRS), sounding reference signal (SRS), demodulation reference signals (DMRS), PTRS, etc.) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

In 5G, the frequency spectrum in which wireless nodes (e.g., base stations 102/180, UEs 104/182) operate is divided into multiple frequency ranges, FR1 (from 450 to 6000 MHz), FR2 (from 24250 to 52600 MHz), FR3 (above 52600 MHz), and FR4 (between FR1 and FR2). In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

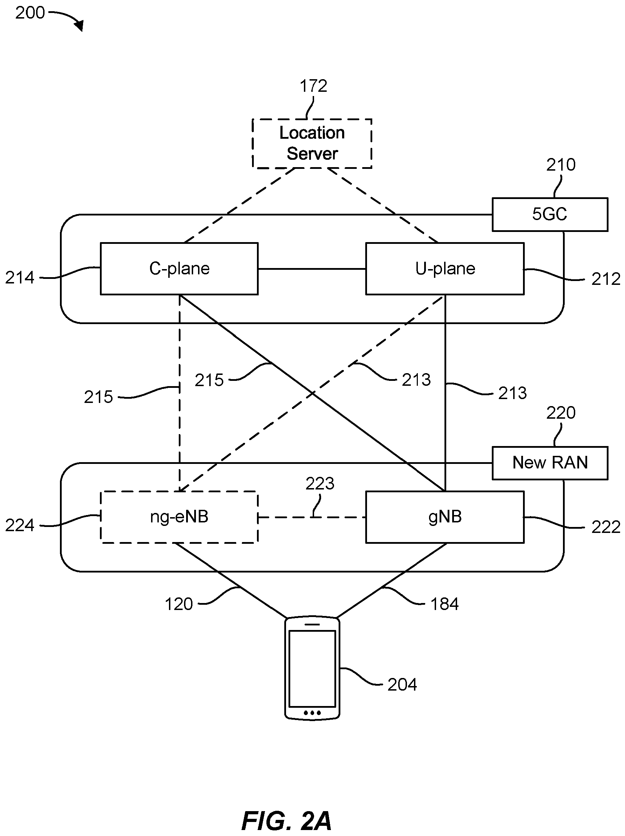

FIG. 2A illustrates an example wireless network structure 200 according to various aspects. For example, a 5GC 210 (also referred to as a Next Generation Core (NGC)) can be viewed functionally as control plane functions 214 (e.g., UE registration, authentication, network access, gateway selection, etc.) and user plane functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the control plane functions 214 and user plane functions 212. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, the New RAN 220 may only have one or more gNBs 222, while other configurations include one or more of both ng-eNBs 224 and gNBs 222. Either gNB 222 or ng-eNB 224 may communicate with UEs 204 (e.g., any of the UEs depicted in FIG. 1). Another optional aspect may include a location server 172, which may be in communication with the 5GC 210 to provide location assistance for UEs 204. The location server 172 can be implemented as multiple separate servers (e.g., physically separate servers, different software modules on a single server, different software modules spread across multiple physical servers, etc.), or alternately may each correspond to a single server. The location server 172 can be configured to support one or more location services for UEs 204 that can connect to the location server 172 via the core network, 5GC 210, and/or via the Internet (not illustrated). Further, the location server 172 may be integrated into a component of the core network, or alternatively may be external to the core network.

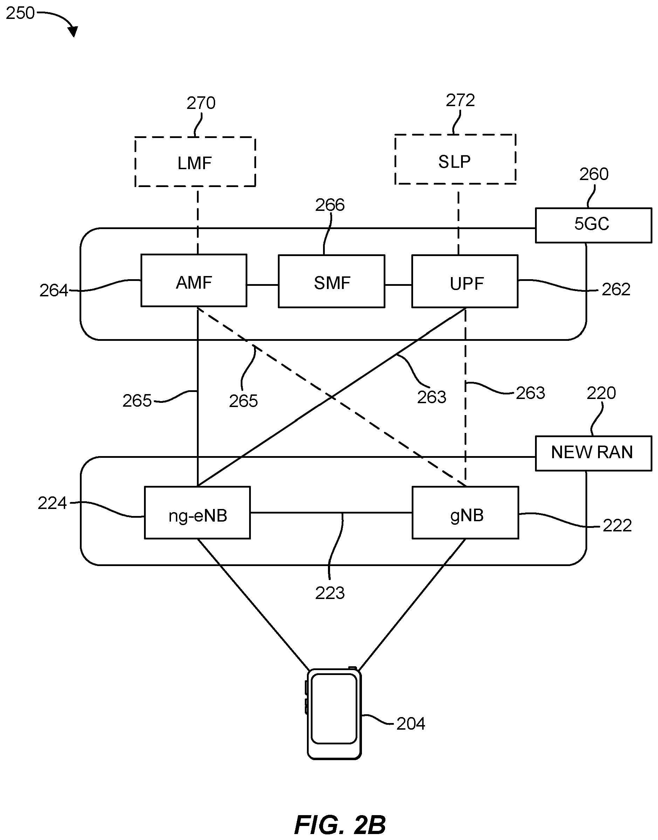

FIG. 2B illustrates another example wireless network structure 250 according to various aspects. For example, a 5GC 260 can be viewed functionally as control plane functions, provided by an access and mobility management function (AMF) 264, and user plane functions, provided by a user plane function (UPF) 262, which operate cooperatively to form the core network (i.e., 5GC 260). User plane interface 263 and control plane interface 265 connect the ng-eNB 224 to the 5GC 260 and specifically to UPF 262 and AMF 264, respectively. In an additional configuration, a gNB 222 may also be connected to the 5GC 260 via control plane interface 265 to AMF 264 and user plane interface 263 to UPF 262. Further, ng-eNB 224 may directly communicate with gNB 222 via the backhaul connection 223, with or without gNB direct connectivity to the 5GC 260. In some configurations, the New RAN 220 may only have one or more gNBs 222, while other configurations include one or more of both ng-eNBs 224 and gNBs 222. Either gNB 222 or ng-eNB 224 may communicate with UEs 204 (e.g., any of the UEs depicted in FIG. 1). The base stations of the New RAN 220 communicate with the AMF 264 over the N2 interface and with the UPF 262 over the N3 interface.

The functions of the AMF 264 include registration management, connection management, reachability management, mobility management, lawful interception, transport for session management (SM) messages between the UE 204 and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 172), transport for location services messages between the New RAN 220 and the LMF 270, evolved packet system (EPS) bearer identifier allocation for interworking with the EPS, and UE 204 mobility event notification. In addition, the AMF 264 also supports functionalities for non-3GPP access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as a secure user plane location (SUPL) location platform (SLP) 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as multiple separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, New RAN 220, and UEs 204 over a control plane (e.g., using interfaces and protocols intended to convey signaling messages and not voice or data), the SLP 272 may communicate with UEs 204 and external clients (not shown in FIG. 2B) over a user plane (e.g., using protocols intended to carry voice and/or data like the transmission control protocol (TCP) and/or IP).

In some aspects, the LMF 270 and/or the SLP 272 may be integrated into a base station, such as the gNB 222 and/or the ng-eNB 224. When integrated into the gNB 222 and/or the ng-eNB 224, the LMF 270 and/or the SLP 272 may be referred to as a location management component (LMC). However, as used herein, references to the LMF 270 and the SLP 272 include both the case in which the LMF 270 and the SLP 272 are components of the core network (e.g., 5GC 260) and the case in which the LMF 270 and the SLP 272 are components of a base station.

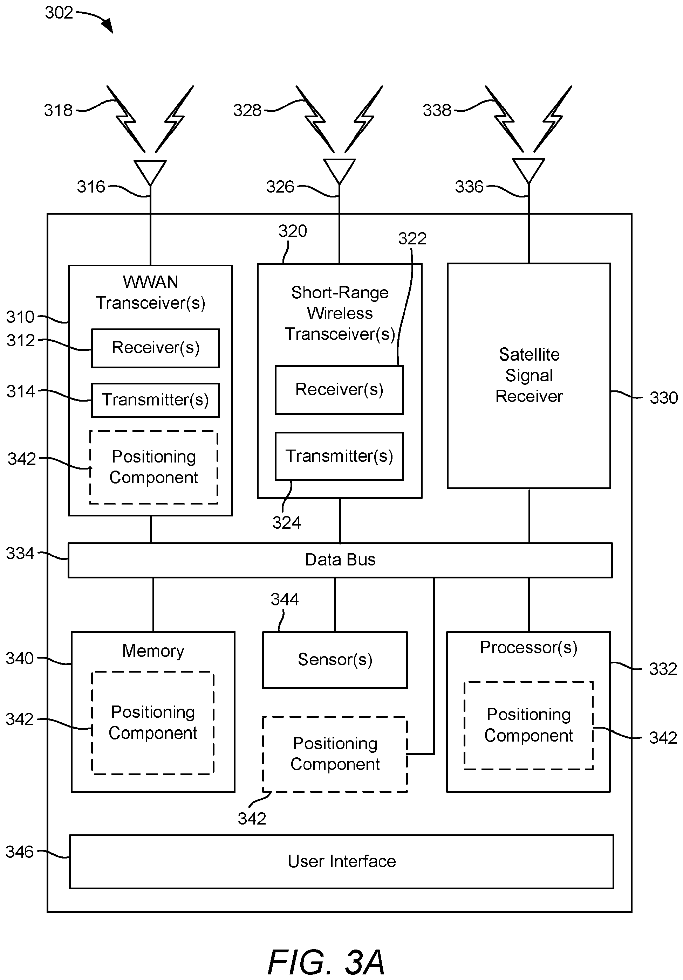

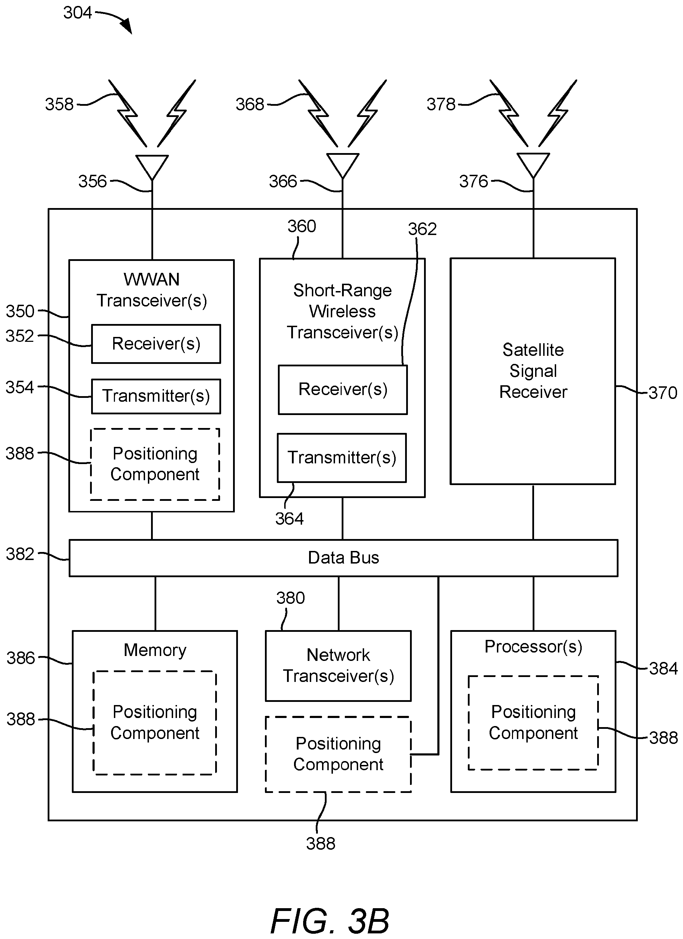

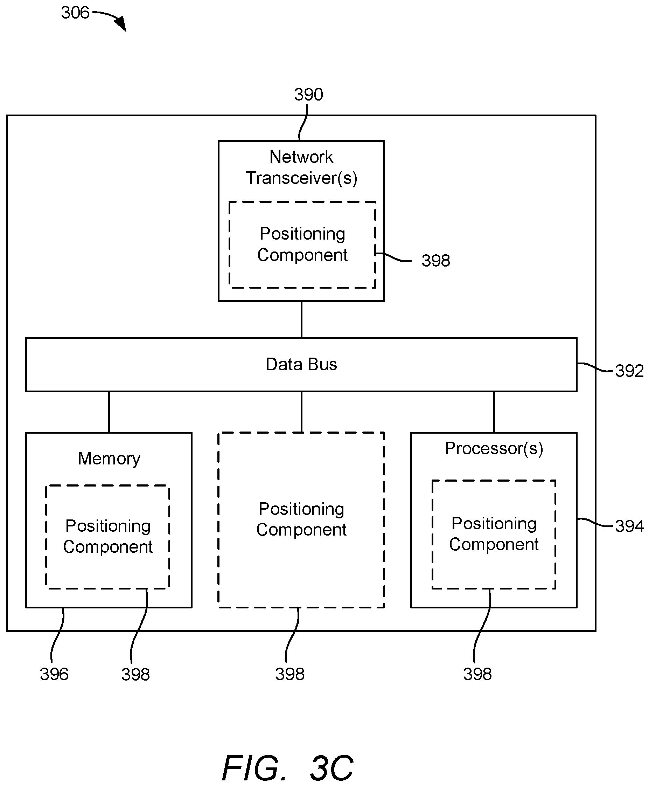

FIGS. 3A, 3B, and 3C illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the file transmission operations as taught herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In some aspects, the transmitter circuitry and receiver circuitry may share the same plurality of antennas (e.g., antennas 316, 326, 356, 366), such that the respective apparatus can only receive or transmit at a given time, not both at the same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In some aspects, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include positioning component 342, 388, and 398, respectively. The positioning component 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the positioning component 342, 388, and 398 may be external to the processors 332, 384, and 394 (e.g., part of a modem processing system, integrated with another processing system, etc.). Alternatively, the positioning component 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the positioning component 342, which may be, for example, part of the one or more WWAN transceivers 310, the memory 340, the one or more processors 332, or any combination thereof, or may be a standalone component. FIG. 3B illustrates possible locations of the positioning component 388, which may be, for example, part of the one or more WWAN transceivers 350, the memory 386, the one or more processors 384, or any combination thereof, or may be a standalone component. FIG. 3C illustrates possible locations of the positioning component 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the uplink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or PC or laptop may have Wi-Fi and/or Bluetooth capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In some aspects, the data buses 334, 382, and 392 may form, or be part of, a communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the positioning component 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as WiFi).

NR supports a number of cellular network-based positioning technologies, including downlink-based, uplink-based, and downlink-and-uplink-based positioning methods. Downlink-based positioning methods include observed time difference of arrival (OTDOA) in LTE, downlink time difference of arrival (DL-TDOA) in NR, and downlink angle-of-departure (DL-AoD) in NR. In an OTDOA or DL-TDOA positioning procedure, a UE measures the differences between the times of arrival (ToAs) of reference signals (e.g., PRS, TRS, narrowband reference signal (NRS), CSI-RS, SSB, etc.) received from pairs of base stations, referred to as reference signal time difference (RSTD) or time difference of arrival (TDOA) measurements, and reports them to a positioning entity. More specifically, the UE receives the identifiers of a reference base station (e.g., a serving base station) and multiple non-reference base stations in assistance data. The UE then measures the RSTD between the reference base station and each of the non-reference base stations. Based on the known locations of the involved base stations and the RSTD measurements, the positioning entity can estimate the UE's location. For DL-AoD positioning, a base station measures the angle and other channel properties (e.g., signal strength) of the downlink transmit beam used to communicate with a UE to estimate the location of the UE.

Uplink-based positioning methods include uplink time difference of arrival (UL-TDOA) and uplink angle-of-arrival (UL-AoA). UL-TDOA is similar to DL-TDOA, but is based on uplink reference signals (e.g., SRS) transmitted by the UE. For UL-AoA positioning, a base station measures the angle and other channel properties (e.g., gain level) of the uplink receive beam used to communicate with a UE to estimate the location of the UE.

Downlink-and-uplink-based positioning methods include enhanced cell-ID (E-CID) positioning and multi-round-trip-time (RTT) positioning (also referred to as "multi-cell RTT"). In an RTT procedure, an initiator (a base station or a UE) transmits an RTT measurement signal (e.g., a PRS or SRS) to a responder (a UE or base station), which transmits an RTT response signal (e.g., an SRS or PRS) back to the initiator. The RTT response signal includes the difference between the ToA of the RTT measurement signal and the transmission time of the RTT response signal, referred to as the reception-to-transmission (Rx-Tx) measurement. The initiator calculates the difference between the transmission time of the RTT measurement signal and the ToA of the RTT response signal, referred to as the "Tx-Rx" measurement. The propagation time (also referred to as the "time of flight") between the initiator and the responder can be calculated from the Tx-Rx and Rx-Tx measurements. Based on the propagation time and the known speed of light, the distance between the initiator and the responder can be determined. For multi-RTT positioning, a UE performs an RTT procedure with multiple base stations to enable its location to be triangulated based on the known locations of the base stations. RTT and multi-RTT methods can be combined with other positioning techniques, such as UL-AoA and DL-AoD, to improve location accuracy.

The E-CID positioning method is based on radio resource management (RRM) measurements. In E-CID, the UE reports the serving cell ID, the timing advance (TA), and the identifiers, estimated timing, and signal strength of detected neighbor base stations. The location of the UE is then estimated based on this information and the known locations of the base stations.

To assist positioning operations, a location server (e.g., location server 172, LMF 270, SLP 272) may provide assistance data to the UE. For example, the assistance data may include identifiers of the base stations (or the cells/TRPs of the base stations) from which to measure reference signals, the reference signal configuration parameters (e.g., the number of consecutive positioning slots, periodicity of positioning slots, muting sequence, frequency hopping sequence, reference signal identifier (ID), reference signal bandwidth, slot offset, etc.), and/or other parameters applicable to the particular positioning method. Alternatively, the assistance data may originate directly from the base stations themselves (e.g., in periodically broadcasted overhead messages, etc.). In some cases, the UE may be able to detect neighbor network nodes itself without the use of assistance data.

A location estimate may be referred to by other names, such as a position estimate, location, position, position fix, fix, or the like. A location estimate may be geodetic and comprise coordinates (e.g., latitude, longitude, and possibly altitude) or may be civic and comprise a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence).

Various frame structures may be used to support downlink and uplink transmissions between network nodes (e.g., base stations and UEs).

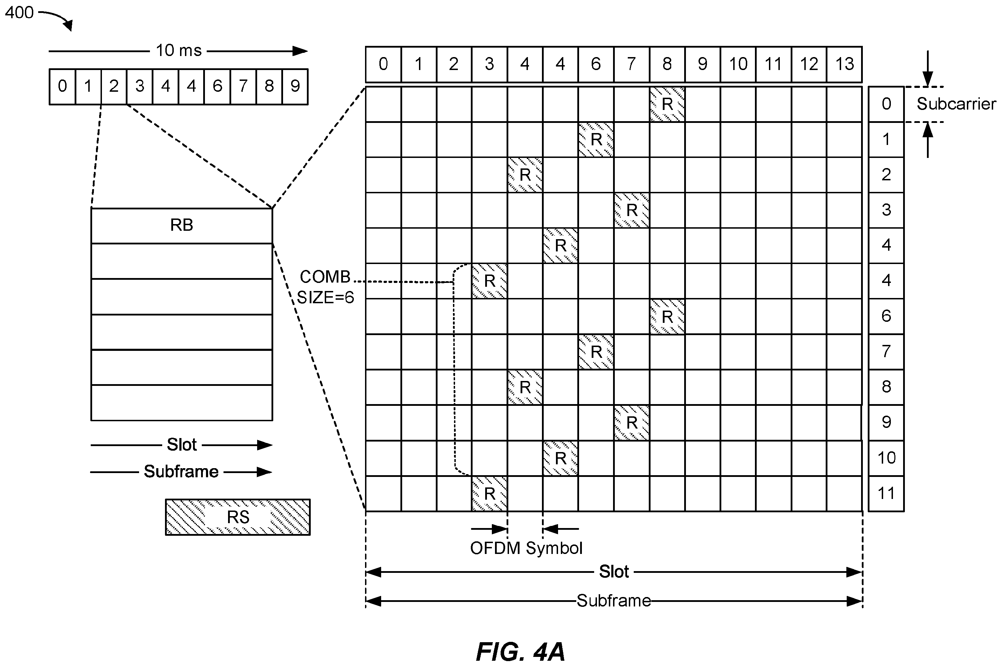

FIG. 4A is a diagram 400 illustrating an example of a downlink frame structure, according to aspects.

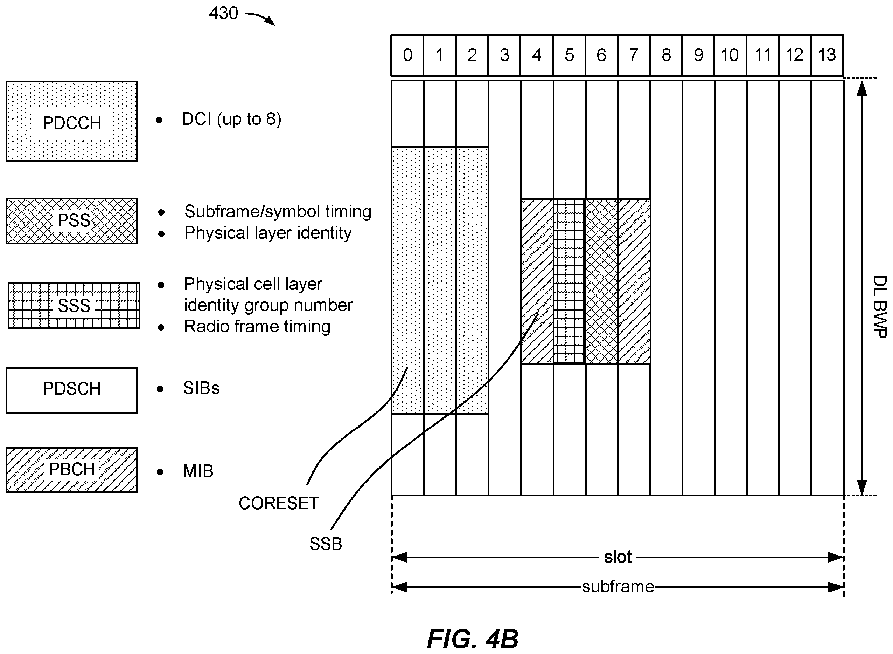

FIG. 4B is a diagram 430 illustrating an example of channels within the downlink frame structure, according to aspects. Other wireless communications technologies may have different frame structures and/or different channels.

LTE, and in some cases NR, utilizes OFDM on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (resource block) may be 12 subcarriers (or 180 kHz). Consequently, the nominal FFT size may be equal to 128, 256, 504, 1024, or 2048 for system bandwidth of 1.25, 2.5, 5, 10, or 20 megahertz (MHz), respectively. The system bandwidth may also be partitioned into subbands. For example, a subband may cover 1.8 MHz (i.e., 6 resource blocks), and there may be 1, 2, 4, 8, or 16 subbands for system bandwidth of 1.25, 2.5, 5, 10, or 20 MHz, respectively.

LTE supports a single numerology (subcarrier spacing, symbol length, etc.). In contrast, NR may support multiple numerologies (µ), for example, subcarrier spacing of 15 kHz, 30 kHz, 60 kHz, 120 kHz, and 240 kHz or greater may be available. Table 1 provided below lists some various parameters for different NR numerologies.

**Table 1**

| µ | SCS (kHz) | Symbols / Sot | Slots / Subframe | Slots / Frame | Slot Duration (ms) | Symbol Duration (µs) | Max. nominal system BW (MHz) with 4K FFT size |
|---|---|---|---|---|---|---|---|
| 0 | 15 | 14 | 1 | 10 | 1 | 66.7 | 50 |
| 1 | 30 | 14 | 2 | 20 | 0.5 | 33.3 | 100 |
| 2 | 60 | 14 | 4 | 40 | 0.25 | 16.7 | 100 |
| 3 | 120 | 14 | 8 | 80 | 0.125 | 8.33 | 400 |
| 4 | 240 | 14 | 16 | 160 | 0.0625 | 4.17 | 800 |

In the example of FIGS. 4A and 4B, a numerology of 15 kHz is used. Thus, in the time domain, a 10 millisecond (ms) frame is divided into 10 equally sized subframes of 1 ms each, and each subframe includes one time slot. In FIGS. 4A and 4B, time is represented horizontally (e.g., on the X axis) with time increasing from left to right, while frequency is represented vertically (e.g., on the Y axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In NR, a subframe is 1ms in duration, a slot is fourteen symbols in the time domain, and an RB contains twelve consecutive subcarriers in the frequency domain and fourteen consecutive symbols in the time domain. Thus, in NR there is one RB per slot. Depending on the SCS, an NR subframe may have fourteen symbols, twenty-eight symbols, or more, and thus may have 1 slot, 2 slots, or more. The number of bits carried by each RE depends on the modulation scheme.

Some of the REs carry downlink reference (pilot) signals (DL-RS). The DL-RS may include PRS, TRS, PTRS, CRS, CSI-RS, DMRS, PSS, SSS, SSB, etc. FIG. 4A illustrates exemplary locations of REs carrying PRS (labeled "R").

A "PRS instance" or "PRS occasion" is one instance of a periodically repeated time window (e.g., a group of one or more consecutive slots) where PRS are expected to be transmitted. A PRS occasion may also be referred to as a "PRS positioning occasion," a "PRS positioning instance, a "positioning occasion," "a positioning instance," a "positioning repetition," or simply an "occasion," an "instance," or a "repetition."

A collection of resource elements (REs) that are used for transmission of PRS is referred to as a "PRS resource." The collection of resource elements can span multiple PRBs in the frequency domain and 'N' (e.g., 1 or more) consecutive symbol(s) within a slot in the time domain. In a given OFDM symbol in the time domain, a PRS resource occupies consecutive PRBs in the frequency domain.

The transmission of a PRS resource within a given PRB has a particular comb size (also referred to as the "comb density"). A comb size 'N' represents the subcarrier spacing (or frequency/tone spacing) within each symbol of a PRS resource configuration. Specifically, for a comb size 'N,' PRS are transmitted in every Nth subcarrier of a symbol of a PRB. For example, for comb-4, for each of the fourth symbols of the PRS resource configuration, REs corresponding to every fourth subcarrier (e.g., subcarriers 0, 4, 8) are used to transmit PRS of the PRS resource. Currently, comb sizes of comb-2, comb-4, comb-6, and comb-12 are supported for DL PRS. FIG. 4A illustrates an exemplary PRS resource configuration for comb-6 (which spans six symbols). That is, the locations of the shaded REs (labeled "R") indicate a comb-6 PRS resource configuration.

A "PRS resource set" is a set of PRS resources used for the transmission of PRS signals, where each PRS resource has a PRS resource ID. In addition, the PRS resources in a PRS resource set are associated with the same TRP. A PRS resource set is identified by a PRS resource set ID and is associated with a particular TRP (identified by a TRP ID). In addition, the PRS resources in a PRS resource set have the same periodicity, a common muting pattern configuration, and the same repetition factor (e.g., *PRS-ResourceRepetitionFactor*) across slots. The periodicity is the time from the first repetition of the first PRS resource of a first PRS instance to the same first repetition of the same first PRS resource of the next PRS instance. The periodicity may have a length selected from 2*^{µ}*·{4, 5, 8, 10, 16, 20, 32, 40, 64, 80, 160, 320, 640, 1280, 2560, 5040, 10240} slots, with µ = 0, 1, 2, 3. The repetition factor may have a length selected from {1, 2, 4, 6, 8, 16, 32} slots.

A PRS resource ID in a PRS resource set is associated with a single beam (and/or beam ID) transmitted from a single TRP (where a TRP may transmit one or more beams). That is, each PRS resource of a PRS resource set may be transmitted on a different beam, and as such, a "PRS resource," or simply "resource," can also be referred to as a "beam." Note that this does not have any implications on whether the TRPs and the beams on which PRS are transmitted are known to the UE.

A "positioning frequency layer" (also referred to simply as a "frequency layer") is a collection of one or more PRS resource sets across one or more TRPs that have the same values for certain parameters. Specifically, the collection of PRS resource sets has the same subcarrier spacing (SCS) and cyclic prefix (CP) type (meaning all numerologies supported for the PDSCH are also supported for PRS), the same Point A, the same value of the downlink PRS bandwidth, the same start PRB (and center frequency), and the same comb-size. The Point A parameter takes the value of the parameter *ARFCN-ValueNR* (where "ARFCN" stands for "absolute radio-frequency channel number") and is an identifier/code that specifies a pair of physical radio channel used for transmission and reception. The downlink PRS bandwidth may have a granularity of four PRBs, with a minimum of 24 PRBs and a maximum of 272 PRBs. Currently, up to four frequency layers have been defined, and up to two PRS resource sets may be configured per TRP per frequency layer.

The concept of a frequency layer is somewhat like the concept of component carriers and bandwidth parts (BWPs), but different in that component carriers and BWPs are used by one base station (or a macro cell base station and a small cell base station) to transmit data channels, while frequency layers are used by several (usually three or more) base stations to transmit PRS. A UE may indicate the number of frequency layers it can support when it sends the network its positioning capabilities, such as during an LTE positioning protocol (LPP) session. For example, a UE may indicate whether it can support one or four positioning frequency layers.

FIG. 4B illustrates an example of various channels within a downlink slot of a radio frame. In NR, the channel bandwidth, or system bandwidth, is divided into multiple BWPs. A BWP is a contiguous set of PRBs selected from a contiguous subset of the common RBs for a given numerology on a given carrier. Generally, a maximum of four BWPs can be specified in the downlink and uplink. That is, a UE can be configured with up to four BWPs on the downlink, and up to four BWPs on the uplink. Only one BWP (uplink or downlink) may be active at a given time, meaning the UE may only receive or transmit over one BWP at a time. On the downlink, the bandwidth of each BWP should be equal to or greater than the bandwidth of the SSB, but it may or may not contain the SSB.

Referring to FIG. 4B, a primary synchronization signal (PSS) is used by a UE to determine subframe/symbol timing and a physical layer identity. A secondary synchronization signal (SSS) is used by a UE to determine a physical layer cell identity group number and radio frame timing. Based on the physical layer identity and the physical layer cell identity group number, the UE can determine a PCI. Based on the PCI, the UE can determine the locations of the aforementioned DL-RS. The physical broadcast channel (PBCH), which carries an MIB, may be logically grouped with the PSS and SSS to form an SSB (also referred to as an SS/PBCH). The MIB provides a number of RBs in the downlink system bandwidth and a system frame number (SFN). The physical downlink shared channel (PDSCH) carries user data, broadcast system information not transmitted through the PBCH, such as system information blocks (SIBs), and paging messages.

The physical downlink control channel (PDCCH) carries downlink control information (DCI) within one or more control channel elements (CCEs), each CCE including one or more RE group (REG) bundles (which may span multiple symbols in the time domain), each REG bundle including one or more REGs, each REG corresponding to 12 resource elements (one resource block) in the frequency domain and one OFDM symbol in the time domain. The set of physical resources used to carry the PDCCH/DCI is referred to in NR as the control resource set (CORESET). In NR, a PDCCH is confined to a single CORESET and is transmitted with its own DMRS. This enables UE-specific beamforming for the PDCCH.

In the example of FIG. 4B, there is one CORESET per BWP, and the CORESET spans three symbols (although it could be only one or two symbols) in the time domain. Unlike LTE control channels, which occupy the entire system bandwidth, in NR, PDCCH channels are localized to a specific region in the frequency domain (i.e., a CORESET). Thus, the frequency component of the PDCCH shown in FIG. 4B is illustrated as less than a single BWP in the frequency domain. Note that although the illustrated CORESET is contiguous in the frequency domain, it need not be. In addition, the CORESET may span less than three symbols in the time domain.

The DCI within the PDCCH carries information about uplink resource allocation (persistent and non-persistent) and descriptions about downlink data transmitted to the UE. Multiple (e.g., up to eight) DCIs can be configured in the PDCCH, and these DCIs can have one of multiple formats. For example, there are different DCI formats for uplink scheduling, for non-MIMO downlink scheduling, for MIMO downlink scheduling, and for uplink power control. A PDCCH may be transported by 1, 2, 4, 8, or 16 CCEs in order to accommodate different DCI payload sizes or coding rates.

The random-access channel (RACH) is a shared channel used by UEs to access the mobile network for call setup and bursty data transmission. There are a number of situations in which a UE may need to use the RACH, including, but not limited to: initial access from the RRC_IDLE state; RRC connection re-establishment; handover; DL or UL data arrival during the RRC_CONNECTED state when the UL synchronization status is "non-synchronized"; transition from the RRC_INACTIVE state; to establish time alignment during addition of an SCell; a request for other system information; and beam failure recovery.

In general, the NR RACH procedure includes the following steps (tailored here to the case of full reciprocity for simplicity). The UE receives an SSB, from which it learns where to receive System Information Block (SIB) one (SIB1). Based on the synchronization information from the gNB contained in SIB 1, the UE selects a RACH preamble sequence (MSG1) and sends it at a RACH occasion (RO) according to an SSB to RO mapping. ROs may be configured to occur every 10, 20, 40, 80, or 160ms. If reciprocity is available, the UE may use the transmit (Tx) beam corresponding to the best Rx beam determined during synchronization and transmits only once. Otherwise, the UE repeats the same preamble for all of the gNB Tx beams. The gNB responds to the detected preambles with a random-access response (RAR) UL grant (MSG2) in the physical downlink shared channel (PDSCH) by using one selected beam. After that, the UE and the gNB establish coarse beam alignment that could be utilized at the subsequent steps. Upon receiving MSG2, the UE responds by sending MSG3 over the resources scheduled by the gNB, which is thus aware where to detect the MSG3 and which gNB Rx beam should be used. The MSG3 physical uplink shared channel (PUSCH) can be sent in the same beam as MSG1 or in a different beam. The gNB confirms the above by sending MSG4 in PDSCH using the gNB Tx beam determined previously.

In contention-based RACH Access (CBRA), the UE randomly selects a RACH preamble from a pool of preambles shared with other UEs in the cell. If multiple UEs select/transmit same preamble during MSG1, all those UEs decode same MSG2 content and transmit MSG3 on the same UL time/frequency resources. In the next step (MSG4), the network resolves the contention. In contention free RACH access (CFRA), the UE uses a dedicated preamble provided by the network specifically to this UE via RRC signaling or PDCCH order.

RACH occasions (RO) are defined in both the time domain and the frequency domain according to a RACH configuration, which the UE receives from the gNB. In NR, frequency domain locations (resources) are determined by the RRC parameters *msg1-FDM* and *msg1-FrequencyStart*, which specifies how many RO are allocated in the frequency domain at the same location in the time domain, and time domain locations (resources) are determined by the RRC parameter *prach-ConfigurationIndex*, which the UE uses to index a table of parameters. An example RACH configuration is shown below:

```
 RACH-ConfigGeneric ::= SEQUENCE {
      prach-ConfigurationIndex
             INTEGER (0..255),
      msg1-FDM
             ENUMERATED {one, two, four, eight},
      msg1-FrequencyStart
             INTEGER (0..maxNrofPhysicalResourceBlocks-1),
      zeroCorrelationZoneConfig
             INTEGER(0..15),
      preambleReceivedTargetPower
             INTEGER (-200..-74),
      preambleTransMax
             ENUMERATED {n3, n4, n5, n6, n7, n8, n10, n20,
             n50, n100, n200},
      powerRampingStep
             ENUMERATED {dB0, dB2, dB4, dB6},
      ra-ResponseWindow
             ENUMERATED {sl1, sl2, sl4, sl8, sl10, sl20, sl40,
             sl80}
 }
```

The Third Generation Partnership Project (3GPP) technical specification (TS) 38.211, v15.5, table 6.3.3.2-4 - a portion of which is shown below - lists random access configurations in the time domain for FR2 and unpaired spectrums.

| **PRACH Config. Index** | **Preamble format** | ***n*_{SFN} mod *x* = *y*** | | **Slot number** | **Starting symbol** | **Number of PRACH slots within a 60 kHz slot** | ${N}_{t}^{RA , slot}$ **, number of time-domain PRACH occasions within a PRACH slot** | ${N}_{dur}^{RA}$ **, PRACH duration** |
|---|---|---|---|---|---|---|---|---|
| | | *x* | *y* | | | | | |
| 8 | A1 | 2 | 1 | 7,15,23,31,39 | 0 | 2 | 6 | 2 |

A UE may be provided with a PRACH configuration index value of 8, for example, from which the UE can determine other information with which to calculate the locations of the ROs in the time domain. According to the symbol location equation described below, the RACH transmission symbols can be calculated as follows: $\begin{matrix}{l = {l}_{0}}^{\begin{matrix}0 \\ ↓\end{matrix}} + {{n}_{t}^{RA}}^{\begin{matrix}0 to 6 - 1 = \left\{0, 1, 2, 3, 4, 5\right\} \\ ↓\end{matrix}} {{N}_{dur}^{RA} +}^{\begin{matrix}2 \\ ↓\end{matrix}} {14 {n}_{slot}^{RA}}^{\begin{matrix}\left\{0, 1\right\} \\ ↓\end{matrix}} \\ = \left\{0, 2, 4, 6, 8, 10, 14, 16, 18, 20, 22, 24\right\}\end{matrix}$ With the calculated RACH transmission symbol and preamble format 3 structure, for example, the RACH occasion in the time domain will be: slot 7, symbol 0-1; slot 7, symbol 2-3; slot 7, symbol 4-5; slot 7, symbol 6-7; slot 7, symbol 8-9; slot 7, symbol 10-11; slot 8, symbol 0-1; slot 8, symbol 2-3; slot 8, symbol 4-5; slot 8, symbol 6-7; slot 8, symbol 8-9; and slot 8, symbol 10-11.

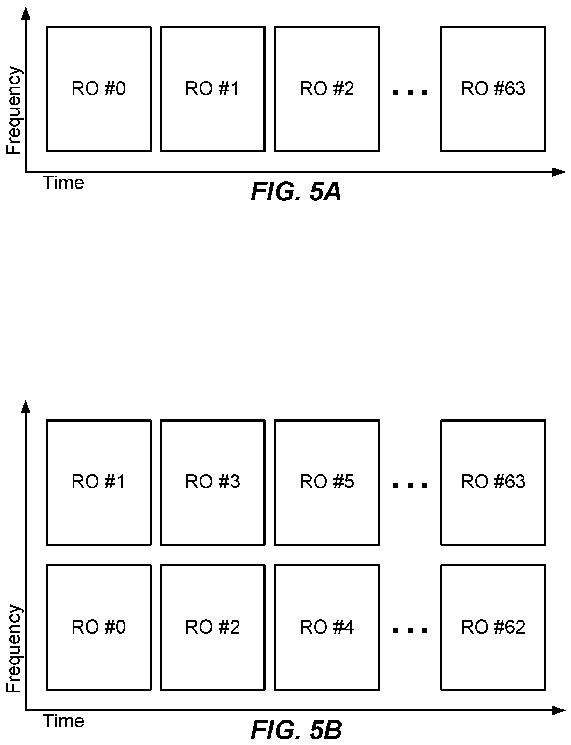

FIGS. 5A and 5B are graphs showing possible locations of ROs in the time and frequency domains according to different RACH configurations. In FIG. 5A, there are 64 ROs occupying the same frequency bandwidth but separated in time. In FIG. 5B, there are 64 ROs occupying the two frequency bandwidths, with pairs of ROs occupying the same location in the time domain. For example, RO #0 and RO #1 occur at the same time but in different frequency ranges, while RO #0 and RO #2 occupy the same frequency range but occur at different times. Other configurations, e.g., having different numbers of ROs, having different numbers of frequency bandwidths, having different locations in time, etc., are also possible.

The disclosure herein presents a mechanism by which a UE in the RRC_IDLE or RRC_INACTIVE state can report the results of a PRS measurement to a BS in such way as to enable the BS to determine what the PRS measurement represents. In some aspects, this is achieved by providing the UE with a PRS to RO mapping that defines specific ROs during which the UE should at least transmit a RACH sequence based on specific PRS measurements. The UE performs a PRS measurement and transmits a RACH sequence according to the PRS to RO mapping based on the specific PRS measurement results. The BS can determine a PRS resource, PRS set, a transmission / reception point (TRP), and/or a layer to which the PRS measurement relates, based on the PRS to RO mapping. A PRS measurement may be a measurement of timing and/or energy of the signal. Performing a PRS measurement refers to measuring characteristics of a PRS signal, such as the Rx-Tx timing, reference signal received power (RSRP), reference signal received quality (RSRQ), signal-to-interference-plus-noise ratio (SINR), reference signal time difference (RSTD), time of arrival (TOA) or time difference of arrival (TDOA) measurements, timestamps, quality metrics measurements, and/or other characteristics. Thus, a PRS measurement may correspond to estimating the TOA of a multipath, or the energy of a multipath. It may other types of information are useful for a location estimation, such as, but not limited to, a quality metric of the TOA estimate, a K-factor, a line of sight (LOS) / non-LOS (NLOS) probability, a power delay profile, a receive angle, and a transmit angle.

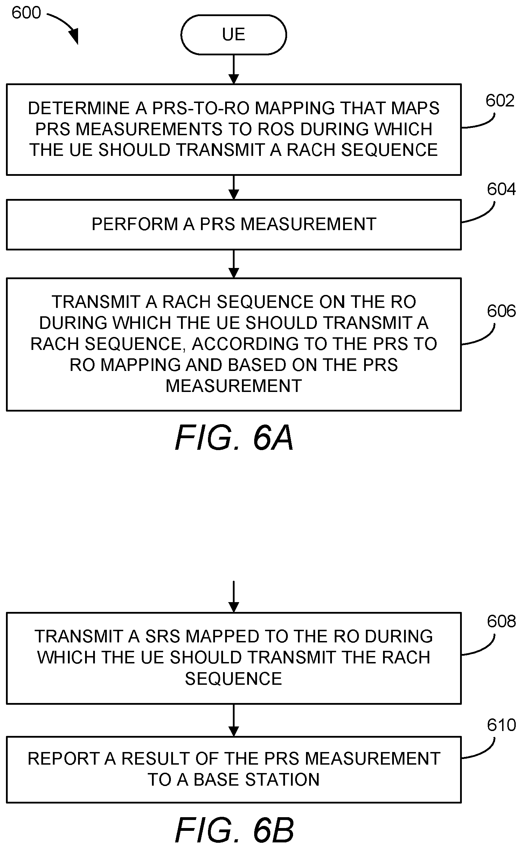

FIG. 6A and FIG. 6B are flowcharts of portions of an example process 600 associated with PRS to RO mapping. In some implementations, one or more process blocks of FIG. 6A may be performed by a UE (e.g., UE 104, WLAN STA 152, etc.). In some implementations, one or more process blocks of FIGS. 6A and 6B may be performed by another device or a group of devices separate from or including the UE. Additionally, or alternatively, one or more process blocks of FIGS. 6A and 6B may be performed by one or more components of UE 302, such as processor(s) 332, memory 340, WWAN transceiver(s) 310, short-range wireless transceiver(s) 320, satellite signal receiver 330, sensor(s) 344, user interface 346, and positioning component(s) 342, any or all of which may be means for performing the operations of process 600.

As shown in FIG. 6A, claimed process 600 includes determining a PRS to RO mapping that maps PRS measurements to ROs during which the UE should transmit a RACH sequence (block 602). Means for performing the operation of block 602 may include the processor(s) 332, memory 340, or WWAN transceiver(s) 310 of the UE 302. In some aspects, determining the PRS to RO mapping comprises receiving the PRS to RO mapping from a base station. For example, the UE 302 may receive the PRS to RO mapping via the receiver(s) 312 and store the PRS to RO mapping in the memory 340. In some aspects, receiving the PRS to RO mapping comprises receiving a SIB or positioning SIB comprising the PRS to RO mapping. In some aspects, the PRS to RO mapping defines a RO during which the UE should transmit a RACH sequence based on specific PRS measurements related to a measurement target, the measurement target comprising one or more identified PRS resources, one or more identified PRS sets, one or more identified TRPs, one or more identified positioning frequency layers, or an identified combination thereof.

As further shown in FIG. 6A, process 600 includes performing at least one PRS measurement (block 604). Means for performing the operation of block 604 may include the processor(s) 332, memory 340, or WWAN transceiver(s) 310 of the UE 302. For example, the UE 302 may perform at least one PRS measurement, using receiver(s) 312 and storing the measurement results in the memory 340. In some aspects, the at least one PRS measurement is performed while the UE is in RRC_IDLE state or RRC_INACTIVE state.

As further shown in FIG. 6A, process 600 includes transmitting a RACH sequence on an RO during which the UE should transmit a RACH sequence, according to the PRS to RO mapping and based on the PRS measurement (block 606). Means for performing the operation of block 606 may include the processor(s) 332, memory 340, or WWAN transceiver(s) 310 of the UE 302. For example, the UE may transmit a RACH sequence on at least one RO according to the PRS to RO mapping and based on the specific PRS measurement, using transmitter(s) 314.

As shown in FIG. 6B, process 600 also includes transmitting an SRS mapped to the RO during which the UE should transmit the RACH sequence (block 608). Means for performing the operation of block 608 may include the WWAN transceiver(s) of the UE 302. For example, the one or more SRSs may be transmitted using the transmitter(s) 314 of the UE 302. In some aspects, multiple SRSs may be transmitted, each SRS having a one-to-one mapping to an RO. In some aspects, at least one of the one or more SRSs is transmitting using a same transmit beam used for the RO, transmitting using one of one or more timing adjustment commands received from a base station, transmitting using a power offset specified by a base station or transmitted using a power offset of zero if a power offset is not specified by the base station, transmitting using time and frequency resources specified by a base station, transmitting using a same time and frequency resource used for the RO, or a combination thereof. In some aspects, transmitting the SRS includes transmitting multiple SRSs, each SRS using one of multiple power offsets.

As further shown in FIG. 6B, process 600 may also include reporting, to a base station, a result of the at least one PRS measurement (block 610). Means for performing the operation of block 610 may include the WWAN transceiver(s) of the UE 302. For example, the UE 302 may transmit the result of the at least one PRS measurement using the transmitter(s) 314 of the UE 302. In some aspects, reporting the result of the PRS measurement to the base station includes transmitting a MSG3 message. In some aspects, the result comprises a reception-to-transmission (Rx-Tx) measurement, a RSRP measurement, a RSTD measurement, a timestamp, a quality metrics measurement, or a combination thereof, wherein the result is reported to the base station according to the at least one PRS measurement, the PRS to RO mapping based on the specific PRS measurement, the SRS, or a combination thereof (block 610). In some aspects, the result of the at least one PRS measurement is reported while the UE is in RRC_IDLE state or RRC_INACTIVE state. In some aspects, the result of the at least one PRS measurement is reported to the base station via at least one PUSCH occasion, via at least one MSG3 message, or combinations thereof.

In some aspects, reporting a plurality of measurements includes transmitting on multiple physical uplink shared channel (PUSCH) occasions. In some aspects, a first subset of the plurality of measurements is transmitted on one of the plurality of PUSCH occasions and wherein a second subset of the plurality of measurements is transmitted on another of the plurality of PUSCH occasions. In some aspects, measurements from a first subset of transmission/reception points (TRPs) are transmitted on one of the plurality of PUSCH occasions and wherein measurements from a second subset TRPs are transmitted on another of the plurality of PUSCH occasions. In some aspects, the measurements from the TRPs are allocated among the plurality of PUSCH occasions such that each PUSCH occasion contains measurements from less than a threshold number of TRPs. In some aspects, the TRPs are allocated among the plurality of PUSCH occasions according to a mapping that specifies a number of measurements for each set of time and frequency resources for a PUSCH occasion.

In some aspects, the BS 102 is a gNB. In some aspects, receiving the PRS to RO mapping includes receiving a SIB that includes the PRS to RO mapping. In some aspects, the SIB is a positioning SIB. In some aspects, the PRS to RO mapping defines a RO during which the UE should report PRS measurements related to one or more identified PRS resources, one or more identified PRS sets, one or more identified transmission / reception points (TRPs), one or more specific layers, or some combination of the above.

In some aspects, transmitting a RACH sequence according to the PRS to RO mapping and the specific PRS measurement results includes measuring a detected PRS resource and transmitting a RACH sequence during a RO to which that detected PRS resource is mapped.

In some aspects, transmitting a RACH sequence according to the PRS to RO mapping and the specific PRS measurement results includes detecting a PRS set and transmitting a RACH sequence during the RO to which that PRS set is mapped.

In some aspects, transmitting a RACH sequence according to the PRS to RO mapping and the specific PRS measurement results includes detecting a TRP and transmitting a RACH sequence during the RO to which that TRP is mapped.

In some aspects, transmitting a RACH sequence according to the PRS to RO mapping and the specific PRS measurement results includes detecting a layer and transmitting a RACH sequence during the RO to which that layer is mapped.

In some aspects, transmitting a RACH sequence according to the PRS to RO mapping and the specific PRS measurement results includes detecting a collection that includes at least one PRS resource, at least one PRS set, at least one TRP, and at least one layer, and transmitting a RACH sequence during the RO to which that collection is mapped.

In some aspects, the UE 104 is in the RRC_IDLE or RRC_INACTIVE state while it performs the PRS measurement and transmits a RACH sequence.

In some aspects, transmitting a RACH sequence according to the PRS to RO mapping and the specific PRS measurement results includes transmitting a RACH sequence during multiple ROs. This will be described in more detail below. Furthermore, where multiple ROs are transmitted by the UE, multiple SRSs may also be transmitted, and there can be a one-to-one mapping between the RO and the SRS.

Process 600 may include additional implementations, such as any single implementation or any combination of implementations described below and/or in connection with one or more other processes described elsewhere herein. Although FIGS. 6A and 6B show example blocks of process 600, in some implementations, process 600 may include additional blocks, fewer blocks, different blocks, or differently arranged blocks than those depicted in FIGS. 6A and 6B. Additionally, or alternatively, two or more of the blocks of process 600 may be performed in parallel.

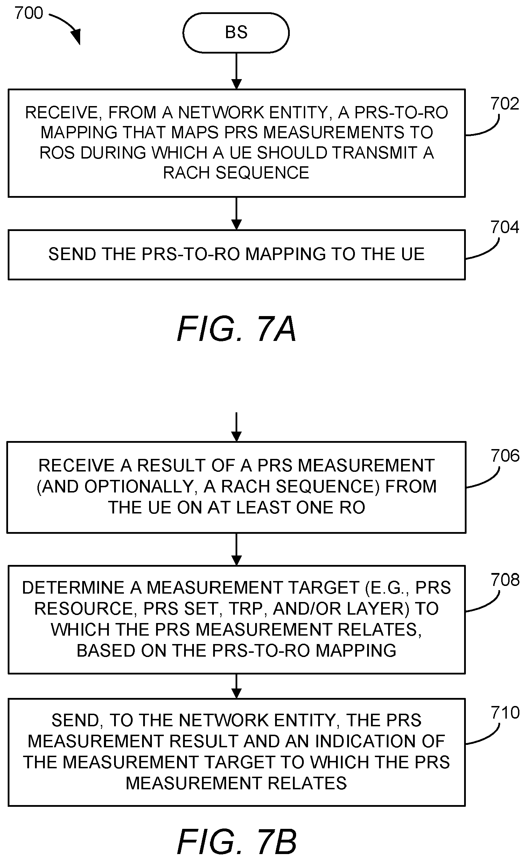

FIG. 7A and FIG. 7B are flowcharts of portions of an example process 700 associated with PRS to RO mapping. In some implementations, one or more process blocks of FIGS. 7A and 7B may be performed by a BS (e.g., BS 102). In some implementations, one or more process blocks of FIGS. 7A and 7B may be performed by another device or a group of devices separate from or including the BS. Additionally, or alternatively, one or more process blocks of FIGS. 7A and 7B may be performed by one or more components of BS 304, such as processor(s) 384, memory 386, WWAN transceiver(s) 350, short-range wireless transceiver(s) 360, satellite signal receiver 370, network transceiver(s) 380, and positioning component(s) 388, any or all of which may be means for performing the operations of process 700.

As shown in FIG. 7A, process 700 may include receiving, from a network entity, a PRS to RO mapping that maps PRS measurements to ROs during which the UE should transmit a RACH sequence (block 702). Means for performing the operation of block 702 may include the processor(s) 384, memory 386, or WWAN transceiver(s) 350 of the BS 304. For example, the BS may receive the PRS to RO mapping via the receiver(s) 352 of the BS 304. In some aspects, the network entity comprises a location server or a location management function.

As further shown in FIG. 7A, process 700 may include sending the PRS to RO mapping to the UE (block 704). Means for performing the operation of block 704 may include the processor(s) 384, memory 386, or WWAN transceiver(s) 350 of the BS 304. For example, the BS may send the PRS to RO mapping to the UE via the transmitter(s) 354 of the BS 304. In some aspects, sending the PRS to RO mapping comprises sending a SIB or a positioning SIB comprising the PRS to RO mapping. In some aspects, the PRS to RO mapping defines a RO during which the UE should report PRS measurements related to a measurement target, the measurement target comprising one or more identified PRS resources, one or more identified PRS sets, one or more identified TRPs, one or more identified positioning frequency layers, or an identified combination of the above.

As shown in FIG. 7B, process 700 may also include receiving a result of a PRS measurement (and optionally, a RACH sequence) from the UE on at least one RO (block 706). Means for performing the operation of block 706 may include the WWAN transceiver(s) 350 of the BS 304. For example, the BS 304 may receive the result of the PRS measurement via the receiver(s) 352 of the BS 304.

As further shown in FIG. 7B, process 700 may also include determining a measurement target to which the PRS measurement relates, based on the PRS to RO mapping (block 708). Means for performing the operation of block 704 may include the processor(s) 384 and memory 386 of the BS 304. For example, the BS 304 may determine the measurement target to which the PRS measurement relates using the processor(s) 384, based on the PRS to RO mapping stored in memory 386.

As further shown in FIG. 7B, process 700 may also include sending, to the network entity, the result of the PRS measurement and an indication of the measurement target to which the PRS measurement relates (block 710). Means for performing the operation of block 706 may include the WWAN transceiver(s) 350 of the BS 304. For example, the BS 304 may send the result of the PRS measurement and an indication of the measurement target to which the PRS measurement relates via the transmitter(s) 354.

Process 700 may include additional implementations, such as any single implementation or any combination of implementations described below and/or in connection with one or more other processes described elsewhere herein. Although FIGS. 7A and 7B show example blocks of process 700, in some implementations, process 700 may include additional blocks, fewer blocks, different blocks, or differently arranged blocks than those depicted in FIGS. 7A and 7B. Additionally, or alternatively, two or more of the blocks of process 700 may be performed in parallel.

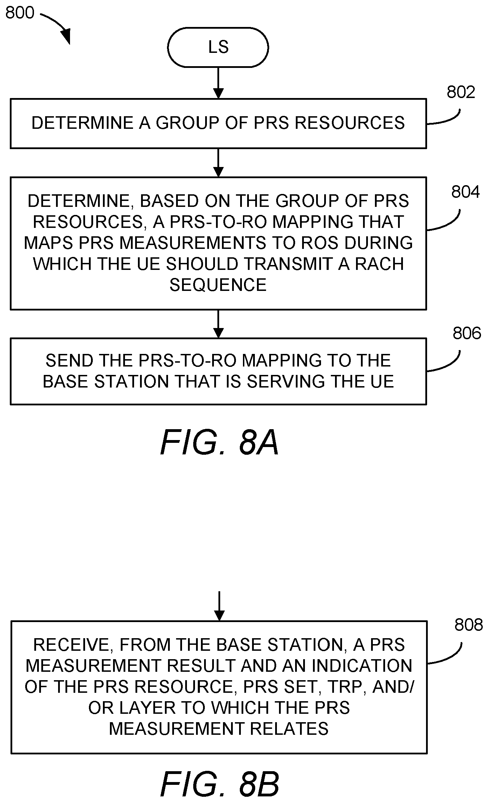

FIG. 8A and FIG. 8B are flowcharts of portions of an example process 800 associated with PRS to RO mapping. In some implementations, one or more process blocks of FIGS. 8A and 8B may be performed by a network entity (e.g., an entity with the core network 170, a location server 172, an LMF 270, etc.). In some aspects, the network entity comprises a location server or a location management function. In some implementations, one or more process blocks of FIGS. 8A and 8B may be performed by another device or a group of devices separate from or including the network entity. Additionally, or alternatively, one or more process blocks of FIGS. 8A and 8B may be performed by one or more components of network entity 306, such as processor(s) 394, memory 396, network transceiver(s) 390, and positioning component(s) 398, any or all of which may be means for performing the operations of process 800.

As shown in FIG. 8A, process 800 may include determining a group of PRS resources (block 802). Means for performing the operation of block 802 may include the processor(s) 394, memory 396, or network transceiver(s) 390 of the network entity 306. For example, the network entity 306 may determine a group of PRS resources, using the processor(s) 394 and store information about the group of PRS resources in the memory 396. For example, an LS 172 may determine a set of PRS resources, PRS sets, TRPS, and/or layers on which the UE 104 may be able to perform a PRS measurement. In some aspects, the LS 172 may determine a set of TRPs that are geographically proximate to a particular UE 104.

As further shown in FIG. 8A, process 800 may include determining, based on the group of PRS resources, a PRS to RO mapping that defines specific ROs during which a UE should at least transmit a RACH sequence based on specific PRS measurements (block 804). Means for performing the operation of block 804 may include the processor(s) 394, memory 396, or network transceiver(s) 390 of the network entity 306. For example, the network entity 306 may use the processor(s) 394 to determine a PRS to RO mapping that defines specific ROs during which a UE should at least transmit a RACH sequence based on specific PRS measurements, based on the information about the group of PRS resources stored in the memory 396. In some aspects, determining the group of PRS resources comprises determining the group of PRS resources based on TRPs in a geographic region.

As further shown in FIG. 8A, process 800 may include sending the PRS to RO mapping to a base station that is serving the UE (block 806). Means for performing the operation of block 806 may include the network transceiver(s) 390 of the network entity 306. For example, the network entity 306 may send the PRS to RO mapping to a base station that is serving the UE via the network transceiver(s) 390. In some aspects, the base station is a co-located with or is a component of the network entity. In some aspects, the base station is a gNB.

As shown in FIG. 8B, process 800 may also include receiving, from the base station, a PRS measurement result and an indication of the PRS resource, PRS set, TRP, or layer to which the PRS measurement relates (block 808). Means for performing the operation of block 808 may include the network transceiver(s) 390 of the network entity 306. For example, the network entity 306 may receive the information from the base station via the network transceiver(s) 390.

Process 800 may include additional implementations, such as any single implementation or any combination of implementations described below and/or in connection with one or more other processes described elsewhere herein. Although FIGS. 8A and 8B show example blocks of process 800, in some implementations, process 800 may include additional blocks, fewer blocks, different blocks, or differently arranged blocks than those depicted in FIGS. 8A and 8B. Additionally, or alternatively, two or more of the blocks of process 800 may be performed in parallel.

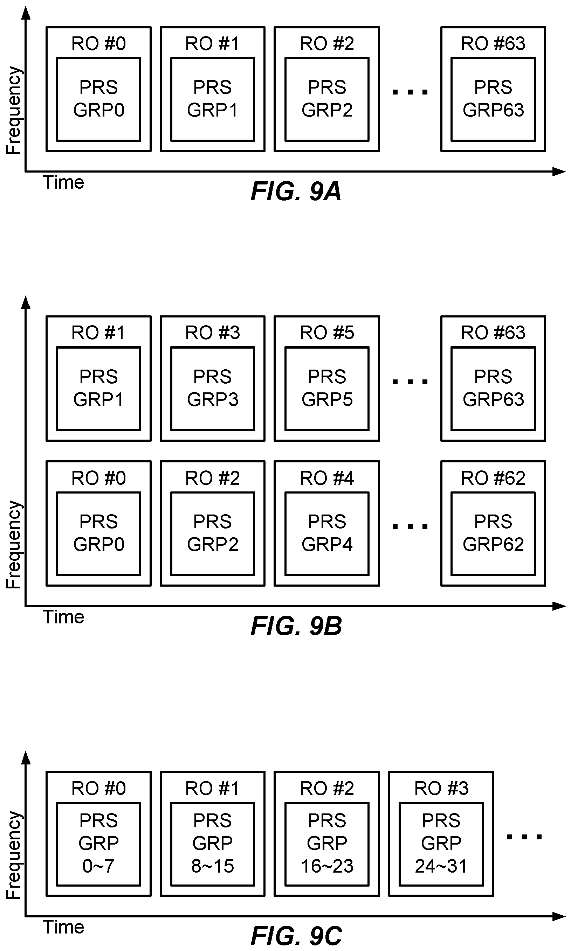

FIGS. 9A through 9F illustrate exemplary PRS to RO mappings according to various aspects. As used herein, the term "PRS group" refers to a collection of one or more identified PRS resources, PRS sets, TRPs, and/or layers.

FIG. 9A illustrates an aspect in which one PRS group is mapped to one RO, where the ROs are configured within a single frequency band. For example, in FIG. 9A, PRS group 0 is mapped to RO #0, PRS group 1 is mapped to RO #1, and so on, with each RO occurring at its own location in the time domain.

FIG. 9B illustrates an aspect in which one PRS group is mapped to one RO, where the ROs are configured within two frequency bands. For example, in FIG. 9B, PRS group 0 is mapped to RO #0, PRS group 1 is mapped to RO #1, and so on, but pairs of ROs occur at the same location in the time domain but in different frequency bands.

FIG. 9C illustrates a variation on FIG. 9A, in which sets of PRS groups are mapped to each RO. In FIG. 9C, PRS groups 0 through 7 occupy RO #0, PRS groups 8-15 occupy RO #1, and so on.

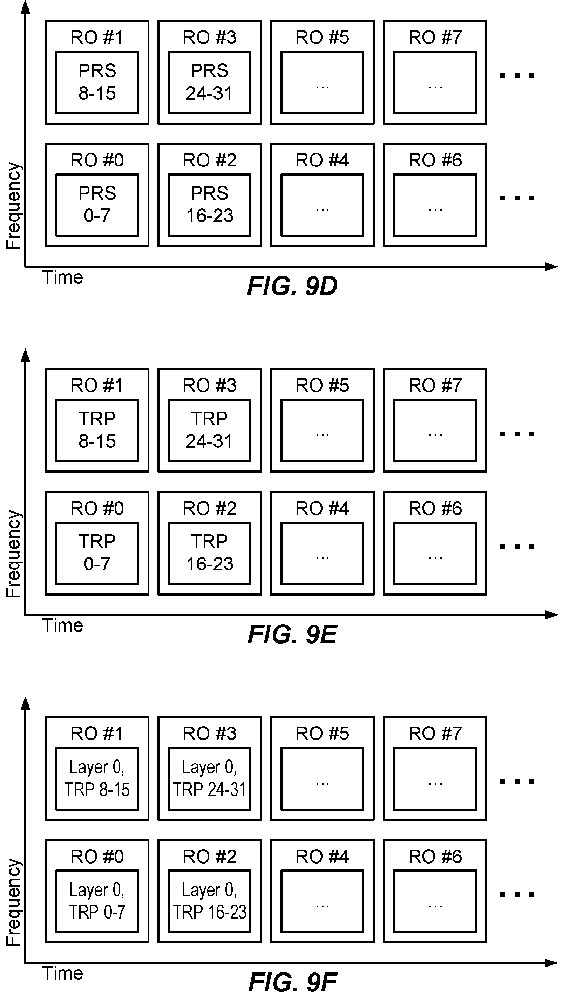

FIG. 9D illustrates a variation on FIG. 9B, in which sets of PRS groups are mapped to each RO. In FIG. 9D, PRS groups 0 through 7 occupy RO #0, PRS groups 8-15 occupy RO #1, and so on.

FIGS. 9A through 9D illustrate the point that PRS groups - however they are defined - may be mapped to particular ROs. FIGS. 9E and 9D give examples of how PRS groups may be defined. These examples are illustrative and not limiting.

FIG. 9E illustrates an aspect in which each PRS group defines a set of one or more TRPs. It will be understood that a UE 104 may detect PRS signals from one or more TRPs, and that the UE 104 may detect a signal from a TRP that is mapped to one RO and that the UE 104 may detect another signal from another TRP that is mapped to another RO. In such a scenario, the UE 104 may report PRS measurement results on more than one RO.

FIG. 9F illustrates an aspect in which each PRS group defines the combination of a specific layer (e.g., layer 0) across a specific set of TRPs.

It will be understood that any combination or combinations of PRS resources, PRS sets, TRPs, and/or layers may make up each PRS group, and that one PRS group may have a different composition than another PRS group. For example, one PRS group may be defined as specific PRS sets, whereas another PRS group may be defined as specific TRPs, and yet another PRS group may be defined as specific layers, and so on.

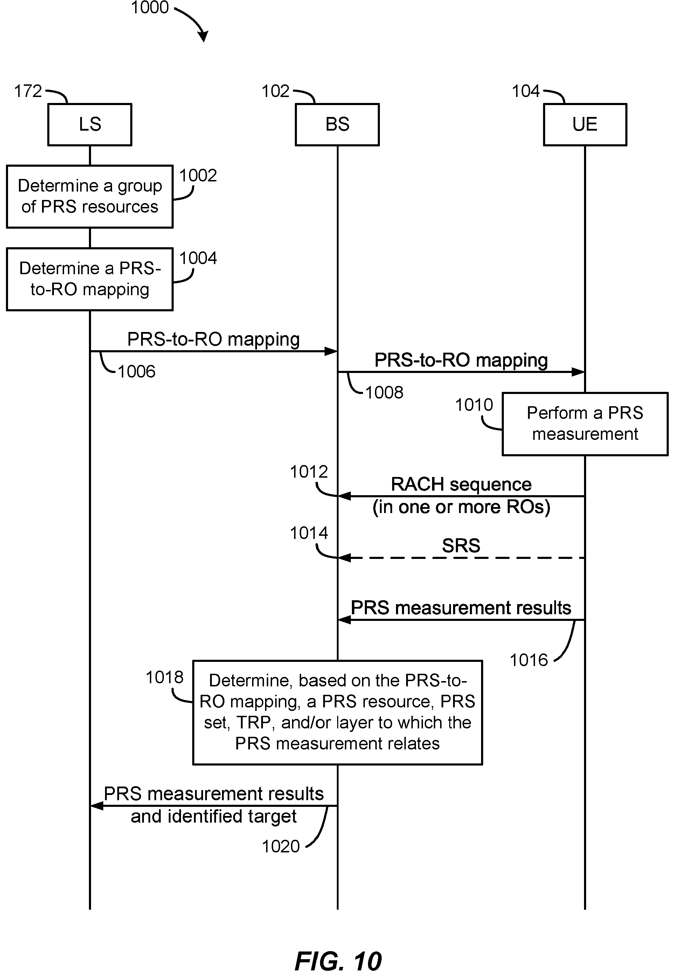

FIG. 10 is a signal messaging diagram showing an exemplary method 1000 of wireless communication according to aspects. FIG. 10 shows an interaction between a core network node (in this example, an LS 172), a BS 102, and a UE 104. In FIG. 10, at block 1002, the LS 172 determines a group of PRS resources. At block 1004, the core network node determines, based on the determined group of PRS resources, a PRS to RO mapping that defines specific ROs during which a UE 104 should at least transmit a RACH sequence based on specific PRS measurements. In FIG. 10, the core network node sends the PRS to RO mapping to the BS 102 (message 1006), which the BS 102 forwards to the UE 104 (message 1008). At block 1010, the UE 104 performs a PRS measurement. In FIG. 10, the UE 104 transmits a RACH sequence (message 1012), using one or more ROs according to the PRS to RO mapping and based on what specific PRS measurements the UE 104 was able to make, e.g., based on what PRS signals the UE 104 was able to detect. In FIG. 10, the UE 104 optionally transmits an SRS 1014. In FIG. 10, the UE 104 transmits PRS measurement results 1016 to the BS 102. In some aspects, the PRS measurement results may be transmitted in a MSG3 message. At block 1018, the BS 102 determines, based on the PRS to RO mapping, a PRS resource, PRS set, TRP, and/or layer to which the PRS measurement relates. In FIG. 10, the BS 102 sends, to the core network node, the PRS measurement results 1020 along with an indication of the PRS resource, PRS set, TRP, and/or layer to which the PRS measurement relates (which is referred to in FIG. 10 as the "identified target").

In some aspects, the association of one or more PRS resources / sets / layers / TRPs with RACH occasions (e.g., the PRS to RO mapping), is as follows: a UE 104 determines an association of a physical RACH (PRACH) to one or multiple PRS resources / sets / TRPs / layers (e.g., by receiving specific positioning SIBs). In some aspects, the UE may request on demand these positioning SIBs that contain information related to the association. The SIBs can be from the same TRP or multiple TRPs. In some aspects, the ordering of mapping PRS resources/sets/TRPs/layers is derived by the ordering/sequence of the assistance data received (either dedicated assistance data or broadcast assistance data).

In some aspects, the UE 104 is in the RRC Idle/Inactive state and measures the PRS resources / sets / TRPs / layers that are broadcast by the network and determines which RACH to transmit. In some aspects, if the UE has detected resources / sets / TRPs / layers that are not mapped to the same RO, the UE can transmit multiple RO. In another aspect, if the UE has detected resources / sets / TRPs / layers that are not mapped to the same RO, the UE may pick one RO out of multiple ROs, as long as it can transmit PRACH to a sufficient set of TRPs needed for positioning. For example, one of the ROs may associate with many detected TRPs while another RO is associated to just a few detected TRPs: in this example, the former RO is preferred over the latter RO.

In some aspects, the UE 104 receives MSG2 from a single BS 102 which includes at least a timing adjustment, such as the timing advance (TA) command. In another aspect, the UE 104 receives MSG2 messages from multiple BS, each including a TA command; In some aspects, the UE 104 may choose one of the TA values that it feels it the best one. In some aspects, where the MSG2 message is just to support positioning, the message can include the TA command for other base stations. For example, it may contain the TA for first base station and also the relative TA values for other base stations with respect to the first base station.

In some aspects, after a PRACH is transmitted, the UE 104 transmits an SRS for positioning using the same Tx beam that was used for the corresponding RO. In another aspect, the UE 104 transmits the SRS for positioning using a different Tx beam than was used for the corresponding RO, or on multiple Tx beams, which may or may not include the beam that was used for the corresponding RO. In some aspects, Tx power offsets from the SRS signal may be indicated to the UE in MSG2. In some aspects, the UE 104 may assume a default power offset of zero. In some aspects, time and/or frequency resources may be determined based on information provided in MSG2 and/or the previous time/frequency resources of the RO that was used. In some aspects, the UE 104 transmits MSG3 with Rx-Tx, RSRP, RSTD, timestamps, quality metrics measurements according to the PRS and transmitted SRS. In some aspects, multiple PUSCH may be needed to be transmitted that includes all the necessary information. For example, one PUSCH may contain the Rx-Tx, another one may contain the timestamps/quality metric. In some aspects, another option is for the UE 104 to split the PUSCH based on the number of TRPs included in each PUSCH. In some aspects, there may be a mapping from the time/frequency resources indicated for PUSCH to the number of measurements/TRPs to be included in the PUSCH.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The various illustrative logical blocks, modules, and circuits described in connection with the aspects disclosed herein may be implemented or performed with a general-purpose processor, a DSP, an ASIC, an FPGA, or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, multiple microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

In some aspects, a method of wireless communication performed by a user equipment (UE) includes determining a positioning reference signal (PRS) to random access channel (RACH) occasion (RO) mapping that defines specific ROs during which the UE should at least transmit a RACH sequence based on specific PRS measurements; performing a PRS measurement; and transmitting a RACH sequence according to the PRS to RO mapping and based on the specific PRS measurement.

In some aspects, the method includes transmitting a sounding reference signal (SRS).

In some aspects, transmitting the SRS comprises transmitting using a same transmit beam used for the RO.

In some aspects, transmitting the SRS comprises transmitting using a timing adjustment command received from a base station.

In some aspects, transmitting the SRS comprises transmitting a plurality of SRSs, each SRS using one of a plurality of timing adjustment commands received from a base station.

In some aspects, transmitting the SRS comprises: transmitting using a power offset specified by a base station; or transmitting using a power offset of zero if a power offset is not specified by the base station.

In some aspects, transmitting the SRS comprises transmitting a plurality of SRSs, each SRS using one of a plurality of power offsets.

In some aspects, transmitting the SRS comprises transmitting using time and frequency resources specified by a base station, and/or transmitting using a same time and frequency resource used for the RO.

In some aspects, the method includes reporting a result of the PRS measurement to a base station.

In some aspects, reporting the result of the PRS measurement to the base station comprises transmitting a MSG3 message.

In some aspects, the MSG3 message comprises at least one of: a reception-to-transmission (Rx-Tx) measurement; a reference signal received power (RSRP) measurement; a reference signal time difference (RSTD) measurement; a timestamp; or a quality metrics measurement; according to the specific PRS measurement and the SRS.

In some aspects, reporting the result of the PRS measurement to the base station comprises reporting a plurality of measurements.

In some aspects, reporting the plurality of measurements comprises transmitting on a plurality of physical uplink shared channel (PUSCH) occasions.

In some aspects, a first subset of the plurality of measurements is transmitted on one of the plurality of PUSCH occasions and a second subset of the plurality of measurements is transmitted on another of the plurality of PUSCH occasions.

In some aspects, measurements from a first subset of transmission/reception points (TRPs) are transmitted on one of the plurality of PUSCH occasions and measurements from a second subset TRPs are transmitted on another of the plurality of PUSCH occasions.

In some aspects, the measurements from the TRPs are allocated among the plurality of PUSCH occasions such that each PUSCH occasion contains measurements from less than a threshold number of TRPs.

In some aspects, the TRPs are allocated among the plurality of PUSCH occasions according to a mapping that specifies a number of measurements for each set of time and frequency resources for a PUSCH occasion.

In some aspects, determining the PRS to RO mapping comprises receiving the PRS to RO mapping from a base station.

In some aspects, the PRS measurement is performed while the UE is in RRC_IDLE state or RRC_INACTIVE state.

In some aspects, receiving the PRS to RO mapping comprises receiving a system information block (SIB) comprising the PRS to RO mapping.

In some aspects, the SIB comprises a positioning SIB.

In some aspects, the PRS to RO mapping defines a RO during which the UE should transmit a RACH sequence based on specific PRS measurements related to: one or more identified PRS resources; one or more identified PRS sets; one or more identified transmission / reception points (TRPs); one or more specific layers; or some combination of the above.

In some aspects, transmitting a RACH sequence according to the PRS to RO mapping and the specific PRS measurement comprises measuring a detected PRS resource and transmitting a RACH sequence during a RO to which the detected PRS resource is mapped.

In some aspects, transmitting a RACH sequence according to the PRS to RO mapping and the specific PRS measurement comprises measuring a detected PRS set and transmitting a RACH sequence during the RO to which the detected PRS set is mapped.

In some aspects, transmitting a RACH sequence according to the PRS to RO mapping and the specific PRS measurement comprises measuring a detected layer and transmitting a RACH sequence during the RO to which the detected layer is mapped.

In some aspects, transmitting a RACH sequence according to the PRS to RO mapping and the specific PRS measurement comprises: detecting a collection comprising at least one PRS resource, at least one PRS set, at least one transmission / reception point (TRP), and/or at least one layer; and transmitting a RACH sequence during the RO to which that collection is mapped.

In some aspects, transmitting a RACH sequence according to the PRS to RO mapping and the specific PRS measurement comprises transmitting a RACH sequence during a plurality of ROs.

In some aspects, the method includes transmitting a plurality of sounding reference signals (SRSs), each SRS having a one-to-one mapping to one of the plurality of ROs.

In some aspects, the method includes reporting a result of the PRS measurement to a base station according to the PRS to RO mapping based on the specific PRS measurement.

In some aspects, the method includes reporting a result of the PRS measurement to a base station according to the PRS to RO mapping and the specific PRS measurement comprises detecting a collection comprising, at least one PRS resource, at least one PRS set, at least one transmission / reception point (TRP), and/or at least one layer; and reporting the result of the PRS measurement to the base station during the RO to which that collection is mapped.

In some aspects, reporting the result of the PRS measurement to a base station according to the PRS to RO mapping and the specific PRS measurement comprises reporting during a plurality of ROs.

In some aspects, the result of the PRS measurement is reported while the UE is in RRC_IDLE state or RRC_INACTIVE state.

In some aspects, a method of wireless communication performed by a base station (BS) includes receiving, from a network entity, a positioning reference signal (PRS) to random access channel (RACH) occasion (RO) mapping that defines specific ROs during which a UE should at least transmit a RACH sequence based on specific PRS measurements; and sending, to the UE, the PRS to RO mapping.

In some aspects, the network entity comprises a location server or a location management function.

In some aspects, sending the PRS to RO mapping comprises sending a system information block (SIB) comprising the PRS to RO mapping.

In some aspects, the SIB comprises a positioning SIB.

In some aspects, the PRS to RO mapping defines a RO during which the UE should report PRS measurements related to: one or more identified PRS resources; one or more identified PRS sets; one or more identified transmission / reception points (TRPs); one or more specific layers; or some combination of the above.

In some aspects, the method includes receiving a PRS measurement result from the UE on at least one RO; and determining a PRS resource, PRS set, transmission / reception point (TRP), and/or layer to which the PRS measurement relates, based on the PRS to RO mapping.

In some aspects, receiving the PRS measurement result from the UE on the at least one RO comprises receiving PRS measurement results on a plurality of ROs.

In some aspects, the method includes sending the PRS measurement result, and an indication of the PRS resource, PRS set, TRP, and/or layer to which the PRS measurement relates, to the network entity.

In some aspects, a method of wireless communication performed by a network entity includes determining a group of PRS resources; determining, based on the group of PRS resources, a positioning reference signal (PRS) to random access channel (RACH) occasion (RO) mapping that defines specific ROs during which a UE should at least transmit a RACH sequence based on specific PRS measurements; and sending the PRS to RO mapping to a base station that is serving the UE.

In some aspects, the network entity comprises a location server or a location management function.

In some aspects, the base station is a co-located with or is a component of the network entity.

In some aspects, the base station comprises a new radio base station (gNB).

In some aspects, determining the group of PRS resources comprises determining the group of PRS resources based on transmission / reception points (TRPs) in a geographic region.

In some aspects, the method includes receiving, from the base station, a PRS measurement result and an indication of the PRS resource, PRS set, TRP, and/or layer to which the PRS measurement relates.

In some aspects, a user equipment (UE) includes a memory; at least one transceiver; and at least one processor communicatively coupled to the memory and the at least one transceiver, the at least one processor configured to: determine a positioning reference signal (PRS) to random access channel (RACH) occasion (RO) mapping that defines specific ROs during which the UE should at least transmit a RACH sequence based on specific PRS measurements; perform a PRS measurement; and transmit a RACH sequence according to the PRS to RO mapping based on the specific PRS measurement.

In some aspects, the at least one processor is further configured to transmit a sounding reference signal (SRS).

In some aspects, transmitting the SRS comprises transmitting using a same transmit beam used for the RO.

In some aspects, transmitting the SRS comprises transmitting using a timing adjustment command received from a base station.

In some aspects, transmitting the SRS comprises transmitting a plurality of SRSs, each SRS using one of a plurality of timing adjustment commands received from a base station.

In some aspects, transmitting the SRS comprises: transmitting using a power offset specified by a base station; or transmitting using a power offset of zero if a power offset is not specified by the base station.

In some aspects, transmitting the SRS comprises transmitting a plurality of SRSs, each SRS using one of a plurality of power offsets.

In some aspects, transmitting the SRS comprises transmitting using time and frequency resources specified by a base station, and/or transmitting using a same time and frequency resource used for the RO.

In some aspects, the at least one processor is further configured to report a result of the PRS measurement to a base station.

In some aspects, reporting the result of the PRS measurement to the base station comprises transmitting a MSG3 message.

In some aspects, the MSG3 message comprises at least one of: a reception-to-transmission (Rx-Tx) measurement; a reference signal received power (RSRP) measurement; a reference signal time difference (RSTD) measurement; a timestamp; or a quality metrics measurement; according to the specific PRS measurement and the SRS.

In some aspects, reporting the result of the PRS measurement to the base station comprises reporting a plurality of measurements.

In some aspects, reporting the plurality of measurements comprises transmitting on a plurality of physical uplink shared channel (PUSCH) occasions.

In some aspects, a first subset of the plurality of measurements is transmitted on one of the plurality of PUSCH occasions and a second subset of the plurality of measurements is transmitted on another of the plurality of PUSCH occasions.

In some aspects, measurements from a first subset of transmission/reception points (TRPs) are transmitted on one of the plurality of PUSCH occasions and measurements from a second subset TRPs are transmitted on another of the plurality of PUSCH occasions.

In some aspects, the measurements from the TRPs are allocated among the plurality of PUSCH occasions such that each PUSCH occasion contains measurements from less than a threshold number of TRPs.

In some aspects, the TRPs are allocated among the plurality of PUSCH occasions according to a mapping that specifies a number of measurements for each set of time and frequency resources for a PUSCH occasion.

In some aspects, determining the PRS to RO mapping comprises receiving the PRS to RO mapping from a base station.

In some aspects, the PRS measurement is performed while the UE is in RRC_IDLE state or RRC_INACTIVE state.

In some aspects, the PRS to RO mapping comprises a system information block (SIB) comprising the PRS to RO mapping.

In some aspects, the SIB comprises a positioning SIB.

In some aspects, the PRS to RO mapping defines a RO during which the UE should transmit a RACH sequence based on specific PRS measurements related to: one or more identified PRS resources; one or more identified PRS sets; one or more identified transmission / reception points (TRPs); one or more specific layers; or some combination of the above.

In some aspects, transmitting a RACH sequence according to the PRS to RO mapping and the specific PRS measurement comprises measuring a detected PRS resource and transmitting a RACH sequence during a RO to which the detected PRS resource is mapped.

In some aspects, transmitting a RACH sequence according to the PRS to RO mapping and the specific PRS measurement comprises measuring a detected PRS set and transmitting a RACH sequence during the RO to which the detected PRS set is mapped.

In some aspects, transmitting a RACH sequence according to the PRS to RO mapping and the specific PRS measurement comprises measuring a detected TRP and transmitting a RACH sequence during the RO to which the detected TRP is mapped.

In some aspects, transmitting a RACH sequence according to the PRS to RO mapping and the specific PRS measurement comprises measuring a detected layer and transmitting a RACH sequence during the RO to which the detected layer is mapped.

In some aspects, the method includes transmitting a RACH sequence according to the PRS to RO mapping and the specific PRS measurement comprises detecting a collection comprising at least one PRS resource, at least one PRS set, at least one transmission / reception point (TRP), and/or at least one layer; and transmitting a RACH sequence during the RO to which that collection is mapped.

In some aspects, transmitting a RACH sequence according to the PRS to RO mapping and the specific PRS measurement comprises transmitting a RACH sequence during a plurality of ROs.

In some aspects, the at least one processor is further configured to transmit a plurality of sounding reference signals (SRSs), each SRS having a one-to-one mapping to one of the plurality of ROs.

In some aspects, the at least one processor is further configured to report a result of the PRS measurement to a base station according to the PRS to RO mapping based on the specific PRS measurement.

In some aspects, the method includes reporting a result of the PRS measurement to the base station comprises detecting a collection comprising at least one PRS resource, at least one PRS set, at least one transmission / reception point (TRP), and/or at least one layer; and reporting the result of the PRS measurement to the base station during the RO to which that collection is mapped.

In some aspects, reporting the result of the PRS measurement to the base station according to the PRS to RO mapping and the specific PRS measurement results comprises reporting during a plurality of ROs.

In some aspects, the result of the PRS measurement is reported while the UE is in RRC_IDLE state or RRC_INACTIVE state.

In some aspects, a base station includes a memory; at least one transceiver; and at least one processor communicatively coupled to the memory and the at least one transceiver, the at least one processor configured to: receive, from a network entity, a positioning reference signal (PRS) to random access channel (RACH) occasion (RO) mapping that defines specific ROs during which a UE should at least transmit a RACH sequence based on specific PRS measurements; and send, to the UE, the PRS to RO mapping.

In some aspects, the network entity comprises a location server or a location management function.

In some aspects, sending the PRS to RO mapping comprises sending a system information block (SIB) comprising the PRS to RO mapping.

In some aspects, the SIB comprises a positioning SIB.

In some aspects, the PRS to RO mapping defines a RO during which the UE should report PRS measurements related to: one or more identified PRS resources; one or more identified PRS sets; one or more identified transmission / reception points (TRPs); one or more specific layers; or some combination of the above.

In some aspects, the method includes receive a PRS measurement from the UE on at least one RO; and determine a PRS resource, PRS set, transmission / reception point (TRP), and/or layer to which the PRS measurement relates, based on the PRS to RO mapping.

In some aspects, receiving the PRS measurement from the UE on the at least one RO comprises receiving PRS measurement results on a plurality of ROs.

In some aspects, a network entity includes a memory; at least one network interface; and at least one processor communicatively coupled to the memory and the at least one network interface, the at least one processor configured to: determine a group of PRS resources; determine, based on the group of PRS resources, a positioning reference signal (PRS) to random access channel (RACH) occasion (RO) mapping that defines specific ROs during which a UE should at least transmit a RACH sequence based on specific PRS measurements; and send the PRS to RO mapping to a base station that is serving the UE.

In some aspects, the network entity comprises a location server or a location management function.

In some aspects, the base station is a co-located with or is a component of the network entity.

In some aspects, the base station comprises a new radio base station (gNB).

In some aspects, determining the group of PRS resources comprises determining the group of PRS resources based on transmission / reception points (TRPs) in a geographic region.

In some aspects, a user equipment (UE) includes means for determining a positioning reference signal (PRS) to random access channel (RACH) occasion (RO) mapping that defines specific ROs during which the UE should at least transmit a RACH sequence based on specific PRS measurements; means for performing a PRS measurement; and means for transmitting a RACH sequence according to the PRS to RO mapping and the specific PRS measurement.

In some aspects, a base station includes means for receiving, from a network entity, a positioning reference signal (PRS) to random access channel (RACH) occasion (RO) mapping that defines specific ROs during which a UE should at least transmit a RACH sequence based on specific PRS measurements; and means for sending, to the UE, the PRS to RO mapping.

In some aspects, the method includes means for receiving a PRS measurement from the UE on at least one RO; and means for determining a PRS resource, PRS set, transmission / reception point (TRP), and/or layer to which the PRS measurement relates, based on the PRS to RO mapping.

In some aspects, the method includes means for sending the PRS measurement, and an indication of the PRS resource, PRS set, TRP, and/or layer to which the PRS measurement relates, to the network entity.

In some aspects, a network entity includes means for determining a group of PRS resources; means for determining, based on the group of PRS resources, a positioning reference signal (PRS) to random access channel (RACH) occasion (RO) mapping that defines specific ROs during which a UE should at least transmit a RACH sequence based on specific PRS measurements; and means for sending the PRS to RO mapping to a base station that is serving the UE.

In some aspects, the method includes means for receiving, from the base station, a PRS measurement and an indication of the PRS resource, PRS set, TRP, and/or layer to which the PRS measurement relates.

In some aspects, a non-transitory computer-readable medium storing computer-executable instructions includes at least one instruction instructing a user equipment (UE) to determine a positioning reference signal (PRS) to random access channel (RACH) occasion (RO) mapping that defines specific ROs during which the UE should at least transmit a RACH sequence based on specific PRS measurements; at least one instruction instructing the UE to perform a PRS measurement; and at least one instruction instructing the UE to transmit a RACH sequence according to the PRS to RO mapping and the specific PRS measurement.

In some aspects, a non-transitory computer-readable medium storing computer-executable instructions includes at least one instruction instructing a base station to receive, from a network entity, a positioning reference signal (PRS) to random access channel (RACH) occasion (RO) mapping that defines specific ROs during which a UE should at least transmit a RACH sequence based on specific PRS measurements; and at least one instruction instructing the base station to send, to the UE, the PRS to RO mapping.

In some aspects, a non-transitory computer-readable medium storing computer-executable instructions includes at least one instruction instructing a network entity to determine a group of PRS resources; at least one instruction instructing the network entity to determine, based on the group of PRS resources, a positioning reference signal (PRS) to random access channel (RACH) occasion (RO) mapping that defines specific ROs during which a UE should at least transmit a RACH sequence based on specific PRS measurements; and at least one instruction instructing the network entity to send the PRS to RO mapping to a base station that is serving the UE.

## Claims

1. A method (600) of wireless communication performed by a user equipment, UE, the method comprising:
determining (602) a positioning reference signal, PRS, to random access channel, RACH, occasion, RO, mapping that maps PRS measurements to ROs during which the UE should transmit a RACH sequence;
performing (604) a PRS measurement;
transmitting (606) the RACH sequence on the RO during which the UE should transmit the RACH sequence, according to the PRS to RO mapping and based on the PRS measurement; and **characterized in that** the method further comprises:
transmitting (608) a sounding reference signal, SRS, mapped to the RO during which the UE should transmit the RACH sequence.

2. The method (600) of claim 1, wherein performing (604) the PRS measurement comprises performing the PRS measurement while the UE is in RRC_IDLE state or RRC_INACTIVE state.

3. The method (600) of claim 1, wherein transmitting (608) the SRS comprises transmitting the SRS:
using a same transmit beam used for the RO during which the UE should transmit the RACH sequence;
using a same time and frequency resource used for the RO during which the UE should transmit the RACH sequence; or
using one of one or more timing adjustment commands received from a base station;
using a power offset specified by the base station or using a power offset of zero if no power offset is specified by the base station;
using time and frequency resources specified by the base station;
a combination thereof.

4. The method (600) of claim 1, further comprising:
reporting, to a base station, a result of the PRS measurement, the result comprising a reception-to-transmission, Rx-Tx, measurement, a reference signal received power, RSRP, measurement, a reference signal time difference, RSTD, measurement, a timestamp, a quality metrics measurement, or a combination thereof,
wherein the result is reported to the base station according to the PRS measurement, the PRS to RO mapping, the SRS, or a combination thereof.

5. The method (600) of claim 4, wherein reporting the result of the PRS measurement comprises reporting the result of the PRS measurement while the UE is in RRC_IDLE state or RRC _INACTIVE state.

6. The method (600) of claim 4, wherein reporting the result of the PRS measurement comprises reporting the result of the PRS measurement to the base station via at least one physical uplink shared channel, PUSCH, occasion, via at least one MSG3 message, or a combination thereof.

7. The method (600) of claim 1, wherein determining (602) the PRS to RO mapping comprises receiving the PRS to RO mapping from a base station.

8. The method (600) of claim 7, wherein receiving the PRS to RO mapping comprises receiving a system information block, SIB, or positioning SIB comprising the PRS to RO mapping.

9. The method (600) of claim 1, wherein determining (602) the PRS to RO mapping comprises mapping PRS measurements related to a measurement target to ROs during which the UE should transmit the RACH sequence, the measurement target comprising:
one or more identified PRS resources;
one or more identified PRS sets;
one or more identified transmission / reception points, TRPs;
one or more identified positioning frequency layers; or
an identified combination thereof.

10. A user equipment, UE, comprising:
means for determining (602) a positioning reference signal, PRS, to random access channel, RACH, occasion, RO, mapping that maps PRS measurements to ROs during which the UE should transmit a RACH sequence;
means for performing (604) a PRS measurement;
means for transmitting (606) the RACH sequence on the RO during which the UE should transmit the RACH sequence, according to the PRS to RO mapping and based on the PRS measurement; and **characterized in that** the UE further comprises
means for transmitting (608) a sounding reference signal, SRS, mapped to the RO during which the UE should transmit the RACH sequence.

11. The UE of claim 10, wherein the means for transmitting (608) the SRS comprises means for transmitting the SRS:
using a same transmit beam used for the RO during which the UE should transmit the RACH sequence;
using a same time and frequency resource used for the RO during which the UE should transmit the RACH sequence; or
using one of one or more timing adjustment commands received from a base station;
using a power offset specified by the base station or using a power offset of zero if no power offset is specified by the base station;
using time and frequency resources specified by the base station;
a combination thereof.

12. The UE of claim 10, further comprising:
means for reporting, to a base station, a result of the PRS measurement, the result comprising a reception-to-transmission, Rx-Tx, measurement, a reference signal received power, RSRP, measurement, a reference signal time difference, RSTD, measurement, a timestamp, a quality metrics measurement, or a combination thereof,
wherein the result is reported to the base station according to the PRS measurement, the PRS to RO mapping, the SRS, or a combination thereof.

13. The UE of claim 12, wherein the means for reporting the result of the PRS measurement comprises means for reporting the result of the PRS measurement while the UE is in RRC IDLE state or RRC INACTIVE state.

14. The UE of claim 12, wherein the means for reporting the result of the PRS measurement comprises means for reporting the result of the PRS measurement to the base station via at least one physical uplink shared channel, PUSCH, occasion, via at least one MSG3 message, or a combination thereof.

15. A non-transitory computer-readable medium storing computer-executable instructions that, when executed by a user equipment, UE, cause the UE to perform the method (600) according to any one of claims 1 to 9.

## Patentansprüche

1. Verfahren (600) zur drahtlosen Kommunikation, durchgeführt von einem UE (User Equipment), wobei das Verfahren Folgendes beinhaltet:
Bestimmen (602) einer PRS-(Positioning Reference Signal)-zu-RO-(RACH (Random Access Channel) Occasion)-Zuordnung, die PRS-Messwerte ROs zuordnet, während denen das UE eine RACH-Sequenz übertragen soll;
Durchführen (604) einer PRS-Messung;
Übertragen (606) der RACH-Sequenz in dem RO, während dem das UE die RACH-Sequenz übertragen soll, gemäß der PRS-zu-RO-Zuordnung und auf der Basis der PRS-Messung; und **dadurch gekennzeichnet, dass** das Verfahren ferner Folgendes beinhaltet:
Übertragen (608) eines SRS (Sounding Reference Signal), das dem RO zugeordnet ist, während dem das UE die RACH-Sequenz übertragen soll.

2. Verfahren (600) nach Anspruch 1, wobei das Durchführen (604) der PRS-Messung das Durchführen der PRS-Messung beinhaltet, während das UE im RRC-IDLE-Zustand oder im RRC-INACTIVE-Zustand ist.

3. Verfahren (600) nach Anspruch 1, wobei das Übertragen (608) des SRS das Übertragen des SRS beinhaltet:
mit demselben Sendestrahl, der für das RO verwendet wird, während dem das UE die RACH-Sequenz übertragen soll;
mit derselben Zeit- und Frequenzressource, die für das RO verwendet wird, während dem das UE die RACH-Sequenz übertragen soll; oder
mit einem von einem oder mehreren von einer Basisstation empfangenen Timing-Justierbefehlen;
mit einem von der Basisstation festgelegten Leistungsversatz oder mit einem Leistungsversatz von Null, falls die Basisstation keinen Leistungsversatz festgelegt hat;
mit von der Basisstation festgelegten Zeit- und Frequenzressourcen;
eine Kombination davon.

4. Verfahren (600) nach Anspruch 1, das ferner Folgendes beinhaltet:
Melden, an eine Basisstation, eines Ergebnisses der PRS-Messung, wobei das Ergebnis eine Rx-Tx-(Reception-to-Transmission)-Messung, eine RSRP-(Reference Signal Received Power)-Messung, eine RSTD-(Reference Signal Time Difference)-Messung, einen Zeitstempel, eine Qualitätsmetrikmessung oder eine Kombination davon umfasst,
wobei das Ergebnis gemäß der PRS-Messung, der PRS-zu-RO-Zuordnung, dem SRS oder einer Kombination davon an die Basisstation gemeldet wird.

5. Verfahren (600) nach Anspruch 4, wobei das Melden des Ergebnisses der PRS-Messung das Melden des Ergebnisses der PRS-Messung beinhaltet, während das UE im RRC-IDLE-Zustand oder im RRC-INACTIVE-Zustand ist.

6. Verfahren (600) nach Anspruch 4, wobei das Melden des Ergebnisses der PRS-Messung das Melden des Ergebnisses der PRS-Messung an die Basisstation über mindestens ein PUSCH-(Physical Uplink Shared Channel)-Ereignis, über mindestens eine MSG3-Nachricht oder eine Kombination davon beinhaltet.

7. Verfahren (600) nach Anspruch 1, wobei das Bestimmen (602) der PRS-zu-RO-Zuordnung das Empfangen der PRS-zu-RO-Zuordnung von einer Basisstation beinhaltet.

8. Verfahren (600) nach Anspruch 7, wobei das Empfangen der PRS-zu-RO-Zuordnung das Empfangen eines SIB (System Information Block) oder eines die PRS-zu-RO-Zuordnung umfassenden Positions-SIB beinhaltet.

9. Verfahren (600) nach Anspruch 1, wobei das Bestimmen (602) der PRS-zu-RO-Zuordnung das Zuordnen von PRS-Messwerten in Bezug auf ein Messziel zu ROs beinhaltet, während denen das UE die RACH-Sequenz übertragen soll, wobei das Messziel Folgendes umfasst:
eine oder mehrere identifizierte PRS-Ressourcen;
einen oder mehrere identifizierte PRS-Sätze;
einen oder mehrere identifizierte TRPs (Transmission/Reception Points);
eine oder mehrere identifizierte Positionsfrequenzschichten; oder
eine identifizierte Kombination davon.

10. UE (User Equipment), das Folgendes umfasst:
Mittel zum Bestimmen (602) einer PRS-(Positioning Reference Signal)-zu-RO-(RACH (Random Access Channel) Occasion)-Zuordnung, die PRS-Messwerte ROs zuordnet, während denen das UE eine RACH-Sequenz übertragen soll;
Mittel zum Durchführen (604) einer PRS-Messung;
Mittel zum Übertragen (606) der RACH-Sequenz in dem RO, während dem das UE die RACH-Sequenz übertragen soll, gemäß der PRS-zu-RO-Zuordnung und auf der Basis der PRS-Messung; und **dadurch gekennzeichnet, dass** das UE ferner Folgendes umfasst:
Mittel zum Übertragen (608) eines SRS (Sounding Reference Signal), das dem RO zugeordnet ist, während dem das UE die RACH-Sequenz übertragen soll.

11. UE nach Anspruch 10, wobei das Mittel zum Übertragen (608) des SRS Mittel umfasst zum Übertragen des SRS:
mit demselben Sendestrahl, der für das RO verwendet wird, während dem das UE die RACH-Sequenz übertragen soll;
mit derselben Zeit- und Frequenzressource, die für das RO verwendet wird, während dem das UE die RACH-Sequenz übertragen soll; oder
mit einem von einem oder mehreren von einer Basisstation empfangenen Timing-Justierbefehlen;
mit einem von der Basisstation festgelegten Leistungsversatz oder mit einem Leistungsversatz von Null, falls die Basisstation keinen Leistungsversatz festgelegt hat;
mit von der Basisstation festgelegten Zeit- und Frequenzressourcen;
eine Kombination davon.

12. UE nach Anspruch 10, das ferner Folgendes umfasst:
Mittel zum Melden, an eine Basisstation, eines Ergebnisses der PRS-Messung, wobei das Ergebnis eine Rx-Tx-(Reception-to-Transmission)-Messung, eine RSRP-(Reference Signal Received Power)-Messung, eine RSTD-(Reference Signal Time Difference)-Messung, einen Zeitstempel, eine Qualitätsmetrikmessung oder eine Kombination davon umfasst,
wobei das Ergebnis gemäß der PRS-Messung, der PRS-zu-RO-Zuordnung, dem SRS oder einer Kombination davon an die Basisstation gemeldet wird.

13. UE nach Anspruch 12, wobei das Mittel zum Melden des Ergebnisses der PRS-Messung Mittel zum Melden des Ergebnisses der PRS-Messung umfasst, während das UE im RRC-IDLE-Zustand oder im RRC-INACTIVE-Zustand ist.

14. UE nach Anspruch 12, wobei das Mittel zum Melden des Ergebnisses der PRS-Messung Mittel zum Melden des Ergebnisses der PRS-Messung an die Basisstation über mindestens ein PUSCH-(Physical Uplink Shared Channel)-Ereignis, über mindestens eine MSG3-Nachricht oder eine Kombination davon umfasst.

15. Nichtflüchtiges, computerlesbares Medium, auf dem computerausführbare Befehle gespeichert sind, die bei Ausführung durch ein UE (User Equipment) das UE zum Durchführen des Verfahrens (600) nach einem der Ansprüche 1 bis 9 veranlassen.

## Revendications

1. Procédé (600) de communication sans fil réalisé par un équipement utilisateur, UE, le procédé comprenant :
la détermination (602) d'un mappage de signal de référence de positionnement, PRS, sur une occasion de canal d'accès aléatoire, RACH, soit occasion RO, qui mappe des mesures de PRS sur des RO durant lesquelles l'UE est censé transmettre une séquence RACH ;
la réalisation (604) d'une mesure de PRS ;
la transmission (606) de la séquence RACH sur la RO durant laquelle l'UE est censé transmettre la séquence RACH, conformément au mappage PRS sur RO et sur la base de la mesure de PRS ; et **caractérisé en ce que** le procédé comprend en outre :
la transmission (608) d'un signal de référence de sondage, SRS, mappé sur la RO durant laquelle l'UE est censé transmettre la séquence RACH.

2. Procédé (600) selon la revendication 1, dans lequel la réalisation (604) de la mesure PRS comprend la réalisation de la mesure PRS tandis que l'UE est dans un état RRC_VEILLE ou RRC_INACTIF.

3. Procédé (600) selon la revendication 1, dans lequel la transmission (608) du SRS comprend la transmission du SRS ;
à l'aide d'un même faisceau d'émission utilisé pour la RO durant laquelle l'UE est censé transmettre la séquence RACH ;
à l'aide d'une même ressource temps et fréquence que celle utilisée pour la RO durant laquelle l'UE est censé transmettre la séquence RACH ; ou
à l'aide d'une ou plusieurs commandes d'ajustement de synchronisation reçues d'une station de base ;
à l'aide d'un décalage de puissance spécifié par la station de base ou d'un décalage de puissance nul si aucun décalage de puissance n'est spécifié par la station de base ;
à l'aide de ressources temps et fréquence spécifiées par la station de base ;
à l'aide d'une combinaison de ceux-ci.

4. Procédé (600) selon la revendication 1, comprenant en outre :
la déclaration, à une station de base, d'un résultat de la mesure de PRS, le résultat comprenant une mesure de réception-transmission, Rx-Tx, une mesure de puissance reçue de signal de référence, RSRP, une mesure de différence de temps de signal de référence, un horodatage, une mesure de métrique de qualité, ou une combinaison de ceux-ci,
dans lequel le résultat est déclaré à la station de base conformément à la mesure de PRS, au mappage PRS sur RO, ou à une combinaison des deux.

5. Procédé (600) selon la revendication 4, dans lequel la déclaration du résultat de la mesure de PRS comprend la déclaration du résultat de la mesure de PRS tandis que l'UE est dans un état RRC_VEILLE ou un état RRC_INACTIF.

6. Procédé (600) selon la revendication 4, dans lequel la déclaration du résultat de la mesure de PRS comprend la déclaration à la station de base au moyen d'une occasion de canal physique partagé de liaison montante, PUSCH, au moyen d'au moins un message MSG3, ou au moyen d'une combinaison des deux.

7. Procédé (600) selon la revendication 1, dans lequel la détermination (602) du mappage PRS sur RO comprend la réception du mappage PRS sur RO depuis une station de base.

8. Procédé (600) selon la revendication 7, dans lequel la réception du mappage PRS sur RO comprend la réception d'un bloc d'informations système, SIB, ou d'un SIB de positionnement comprenant le mappage PRS sur RO.

9. Procédé (600) selon la revendication 1, dans lequel la détermination (602) du mappage PRS sur RO comprend le mappage de mesures de PRS liées à une cible de mesure sur des RO durant lesquelles l'UE est censé transmettre la séquence RACH, la cible de mesure comprenant :
une ou plusieurs ressources de PRS identifiées ;
un ou plusieurs ensembles de PRS identifiés ;
un ou plusieurs points de transmission/réception, TRP, identifiés ;
une ou plusieurs couches de fréquences de positionnement identifiées ; ou
une combinaison identifiée de ceux-ci.

10. Équipement utilisateur, UE, comprenant :
un moyen de détermination (602) d'un mappage de signal de référence de positionnement, PRS, sur une occasion de canal d'accès aléatoire, RACH, soit occasion RO, qui mappe des mesures de PRS sur des RO durant lesquelles l'UE est censé transmettre une séquence RACH ;
un moyen de réalisation (604) d'une mesure de PRS ;
un moyen de transmission (606) de la séquence RACH sur la RO durant laquelle l'UE est censé transmettre la séquence RACH, conformément au mappage PRS sur RO et sur la base de la mesure de PRS ; et **caractérisé en ce que** l'UE comprend en outre :
un moyen de transmission (608) d'un signal de référence de sondage, SRS, mappé sur la RO durant laquelle l'UE est censé transmettre la séquence RACH.

11. UE selon la revendication 10, dans lequel le moyen de transmission (608) du SRS comprend un moyen de transmission du SRS :
à l'aide d'un même faisceau d'émission utilisé pour la RO durant laquelle l'UE est censé transmettre la séquence RACH ;
à l'aide d'une même ressource temps et fréquence que celle utilisée pour la RO durant laquelle l'UE est censé transmettre la séquence RACH ; ou
à l'aide d'une ou plusieurs commandes d'ajustement de synchronisation reçues d'une station de base ;
à l'aide d'un décalage de puissance spécifié par la station de base ou d'un décalage de puissance nul si aucun décalage de puissance n'est spécifié par la station de base ;
à l'aide de ressources temps et fréquence spécifiées par la station de base ;
à l'aide d'une combinaison de ceux-ci.

12. UE selon la revendication 10, comprenant en outre :
un moyen de déclaration, à une station de base, d'un résultat de la mesure de PRS, le résultat comprenant une mesure de réception-transmission, Rx-Tx, une mesure de puissance reçue de signal de référence, RSRP, une mesure de différence de temps de signal de référence, un horodatage, une mesure de métrique de qualité, ou une combinaison de ceux-ci,
dans lequel le résultat est déclaré à la station de base conformément à la mesure de PRS, au mappage PRS sur RO, ou une combinaison des deux.

13. UE selon la revendication 12, dans lequel le moyen de déclaration du résultat de la mesure de PRS comprend un moyen de déclaration du résultat de la mesure PRS tandis que l'UE est dans un état RRC_VEILLE ou un état RRC_INACTIF.

14. UE selon la revendication 12, dans lequel le moyen de déclaration du résultat de la mesure de PRS comprend un moyen de déclaration du résultat de la mesure PRS à la station de base au moyen d'une occasion de canal physique partagé de liaison montante, PUSCH, au moyen d'au moins un message MSG3, ou d'une combinaison des deux.

15. Support non transitoire lisible par ordinateur stockant des instructions exécutables par ordinateur qui, une fois exécutées par un équipement utilisateur, UE, amènent l'UE à réaliser le procédé (600) selon l'une quelconque des revendications 1 à 9.
